# EUROPEAN PATENT APPLICATION

(11) **EP 1 069 564 A2**
(43) Date of publication of application: **17.01.2001**
(21) Application number: 00305795.7
(22) Date of filing: 10.07.2000
(51) Int. Cl.: G11B 20/00

(54) **Digital data recording device, digital data memory device, and digital data utilizing device that produce problem reports**

(30) Priority: 15.07.1999 JP 20121399
(71) Applicant: MATSUSHITA ELECTRIC INDUSTRIAL CO., LTD., Kadoma-shi, Osaka 571 (JP)
(72) Inventor: Kumazaki, Yoji, Kasugai-shi, Aichi-ken 480-0304 (JP); Ono, Takatoshi, Jimokuji-cho, Ama-gun Aichi-ken 490-1111 (JP)
(74) Representative: Butcher, Ian James

(57) **Abstract**

A digital data utilizing device connects with a digital data intelligent memory device, receives digital data from the digital data intelligent memory device, and utilizes the received digital data. When the processing from the connection with the digital data intelligent memory device to the utilization of the digital data is aborted at some point and the utilization of the digital data becomes impossible, the digital data utilizing device produces a problem report notifying the user of a reason why the digital data cannot be utilized, based on at which point the processing is aborted.

## Description

This application is based on applications Nos. H11-201213 and 2000-131169 filed in Japan, the contents of which are hereby incorporated by reference.

### BACKGROUND OF THE INVENTION

### Field of the Invention

The present invention relates to devices for recording and utilizing digital data, and in particular relates to techniques for preventing unauthorized use of digital data and increasing user friendliness.

### Description of the Related Art

The digitization of information is increasing in recent years. Since digitized information (hereinafter, "digital content") is not only relatively easy to use but also will not deteriorate with time, information such as audio and image data is becoming more and more digitized.

However, if digital content is copied, the copy will end up being precisely identical to the original. This provokes unauthorized acts such as illegal copying or tampering of copyrighted information.

To discourage unauthorized use of digital content, a method is devised whereby the digital content is accompanied by management information that shows conditions for the use of the digital content, and the use of the digital content is prohibited if any of these conditions is not satisfied.

Also, to prevent an invalid device from using the digital content, there is a method whereby two devices authenticate each other (i.e. mutual authentication) before the use of the digital content, and any unauthenticated device is prohibited from using the digital content.

There is further a method whereby storage mediums such as memory cards are respectively given unique numbers (hereinafter, "card IDs") so that each storage medium stores only digital content encrypted using its own card ID. According to this method, even when digital content which has been encrypted and stored on a memory card is copied onto another memory card, the copy of the encrypted digital content cannot be decrypted with a card ID of the latter memory card, so that the unauthorized copying will end in failure.

However, when there are many conditions which need to be satisfied to use digital content or there are many processes which need to be performed before using the digital content, a user who attempts to use the digital content may not be able to do so because of the occurrence of an error in the processes or a failure to meet any of the conditions (hereinafter, such errors and failures are collectively called "problems") When this happens, the user has difficulty in finding out why the digital content cannot be used, and therefore cannot deal with the problem appropriately.

### SUMMARY OF THE INVENTION

In view of the stated problem, the present invention aims to provide a digital data recording device, digital data memory device, and digital data utilizing device that enable a user to react appropriately when the user cannot use digital content due to the occurrence of a problem, and computer-readable storage mediums storing digital data recording and utilizing programs.

To achieve the above object, the invention provides a digital data utilizing device for receiving digital data from a digital data intelligent memory device and utilizing the digital data, including: a connecting unit for connecting the digital data utilizing device with the digital data intelligent memory device; a receiving unit for receiving the digital data from the digital data intelligent memory device connected with the digital data utilizing device; a utilizing unit for utilizing the digital data received by the receiving unit; and a problem reporting unit for reporting to a user, when processing from the connection by the connecting unit to the utilization by the utilizing unit is aborted at some point and the utilization of the digital data becomes impossible, a reason why the digital data cannot be utilized, based on at which point the processing is aborted.

With this construction, the digital data utilizing device reports to the user the reason why the digital data cannot be used, based on the point at which the processing is aborted.

Accordingly, when the digital data cannot be used due to the occurrence of some problem, the user can readily identify and appropriately handle the problem.

Here, the digital data utilizing device may further include a mutual authenticating unit for authenticating, before the reception of the digital data by the receiving unit, the digital data intelligent memory device through an exchange of data with the digital data intelligent memory device, in mutual authentication between the digital data utilizing device and the digital data intelligent memory device, wherein the digital data intelligent memory device sends the digital data when the digital data intelligent memory device has succeeded in authenticating the digital data utilizing device, and sends authentication failure information when the digital data intelligent memory device has failed to authenticate the digital data utilizing device, wherein the receiving unit receives the digital data when the mutual authenticating unit has succeeded in authenticating the digital data intelligent memory device, and wherein the problem reporting unit includes: an authentication failure information receiving unit for receiving the authentication failure information from the digital data intelligent memory device; a reason determining unit for determining that the digital data cannot be utilized because the digital data intelligent memory device is invalid, when the mutual authenticating unit has failed to authenticate the digital data intelligent memory device, and determining that the digital data cannot be utilized because the digital data utilizing device is invalid, when the authentication failure information receiving unit receives the authentication failure information; and a reason notifying unit for notifying the user of the reason determined by the reason determining unit.

With this construction, when the mutual authentication between the digital data utilizing device and the digital data intelligent memory device has failed, the user is notified which device is invalid.

Here, the problem reporting unit may further include a timeout judging unit for judging whether data which the digital data utilizing device should receive from the digital data intelligent memory device is received within a predetermined time period, wherein the reason determining unit determines that the digital data cannot be utilized because of a failure of the digital data intelligent memory device, when the timeout judging unit judges that the data was not received within the predetermined time period.

With this construction, when the data necessary for the authentication is not received within the predetermined time period, the user is notified that a failure has occurred in the digital data intelligent memory device.

Here, the digital data received by the receiving unit may include digital content which is subjected to utilization and management information which shows at least one condition to be met for utilizing the digital content, the management information having been encrypted, wherein the utilizing unit includes: a management information decrypting unit for decrypting the encrypted management information received by the receiving unit, to obtain the management information; a decryption judging unit for judging whether the management information decrypting unit has succeeded in decrypting the encrypted management information; and a content utilizing unit for utilizing the digital content received by the receiving unit, if the decryption judging unit judges that the management information decrypting unit has succeeded in decrypting the encrypted management information, and wherein the problem reporting unit includes: a reason determining unit for determining that the digital data cannot be utilized because the management information has been tampered with, when the decryption judging unit judges that the management information decrypting unit has failed to decrypt the encrypted management information; and a reason notifying unit for notifying the user of the reason determined by the reason determining unit.

With this construction, the management information has been encrypted to prevent unauthorized tampering while it is being sent from the digital data intelligent memory device to the digital data utilizing device. If the decryption of the encrypted management information has failed, the user is notified that the management information itself has been tampered with.

Here, the management information may have been encrypted in such a manner that the encrypted management information can be decrypted based on a device ID uniquely given to the digital data intelligent memory device, wherein the digital data utilizing device further includes a device ID acquiring unit for acquiring the device ID from the digital data intelligent memory device connected with the digital data utilizing device, wherein the management information decrypting unit decrypts the encrypted management information received by the receiving unit, based on the device ID acquired by the device ID acquiring unit, and wherein the reason determining unit determines that the digital data cannot be utilized because the management information has been tampered with or because the encrypted management information has been illegally copied into the digital data intelligent memory device from another digital data intelligent memory device, when the decryption judging unit judges that the management information decrypting unit has failed to decrypt the encrypted management information.

With this construction, the management information has been encrypted so that the encrypted management information can be decrypted based on the device ID of the digital data intelligent memory device, to prevent unauthorized copying of the encrypted management information. If the decryption of the encrypted management information has failed, the user is notified that the management information itself has been tampered with or that the encrypted management information has been illegally copied to the digital data intelligent memory device from another digital data intelligent memory device.

Here, the utilizing unit may further include a condition judging unit for judging, when the decryption judging unit judges that the management information decrypting unit has succeeded in decrypting the encrypted management information, whether the utilization of the digital content is permitted or prohibited, by checking whether the conditions shown in the management information obtained by the management information decrypting unit are met, wherein the content utilizing unit utilizes the digital content if the condition judging unit judges that the utilization of the digital content is permitted, and wherein the reason determining unit determines that the digital data cannot be utilized because any of the conditions for utilizing the digital content is not met, when the condition judging unit judges that the utilization of the digital content is prohibited.

With this construction, when the use of the digital content is prohibited because any of the conditions shown in the management information is not met, the user is notified that the condition for the use of the digital content is not met.

Here, the digital content received by the receiving unit may have been coded in a predetermined data format and be compatible only with a predetermined service, wherein the conditions shown in the management information includes a service type limitation specifying the service compatible with the digital content, wherein the utilizing unit further includes a service information holding unit for holding service information showing at least one service which the digital data utilizing device is compatible with, wherein the condition judging unit judges that the utilization of the digital content is prohibited, if the service specified by the service type limitation does not match any of the services shown by the service information, and wherein the reason determining unit determines that the digital data cannot be utilized because the digital data utilizing device does not provide the service compatible with the digital content, when the condition judging unit judges that the utilization of the digital content is prohibited.

With this construction, when the use of the digital content is prohibited because the service type limitation is not satisfied, the user is notified that the digital data utilizing device does not provide the service compatible with the digital content.

Here, the conditions shown in the management information may include a limitation on a number of times the digital content can be utilized, wherein the condition judging unit judges that the utilization of the digital content is prohibited, if the number is smaller than 1, and wherein the reason determining unit determines that the digital data cannot be utilized because the number of times the digital content can be utilized is 0, when the condition judging unit judges that the utilization of the digital content is prohibited.

With this construction, when the use of the digital content is prohibited because the number of times the digital content can be used is 0, the user is notified that no further use of the digital content is permitted.

Here, the conditions shown in the management information may include a time limit for utilizing the digital content, wherein the utilizing unit further includes a clocking unit for showing current date and time, wherein the condition judging unit judges that the utilization of the digital content is prohibited, if the current date and time exceed the time limit, and wherein the reason determining unit determines that the digital data cannot be utilized because of expiration of the time limit, when the condition judging unit judges that the utilization of the digital content is prohibited.

With this construction, when the use of the digital content is prohibited because of the expiration of the time limit, the user is notified that the time limit for the use of the digital content expired.

Here, the conditions shown in the management information may include duplication information showing whether there is a right to duplicate the digital content, wherein the utilizing unit further includes an operation type judging unit for judging whether the user instructs the duplication of the digital content, wherein the condition judging unit judges that the duplication of the digital content is prohibited, if the user instructs the duplication of the digital content but the duplication information shows there is no right to duplicate the digital content, and wherein the reason determining unit determines that the digital data cannot be utilized because there is no right to duplicate the digital content, when the condition judging unit judges that the duplication of the digital content is prohibited.

With this construction, when the duplication of the digital content is prohibited because there is no duplication right, the user is notified that there is no right to duplicate the digital content.

Here, the conditions shown in the management information may further include a limitation on a number of times the digital content can be duplicated, wherein the condition judging unit judges that the duplication of the digital content is prohibited, if the user instructs the duplication of the digital content and the duplication information shows there is a right to duplicate the digital content, but if the number of times the digital content can be duplicated is smaller than 1, and wherein the reason determining unit determines that the digital data cannot be utilized because the number of times the digital content can be duplicated is 0, when the condition judging unit judges that the duplication of the digital content is prohibited.

With this construction, when the duplication of the digital content is prohibited because the number of times the digital content can be duplicated is 0, the user is notified that no further duplication of the digital content is permitted.

Here, the conditions shown in the management information may include an area limitation specifying areas where the digital content can be utilized, wherein the utilizing unit further includes a device area information holding unit for holding device area information showing an area which relates to the digital data utilizing device, wherein the condition judging unit judges that the utilization of the digital content is prohibited, if the areas specified by the area limitation do not contain the area shown by the device area information, and wherein the reason determining unit determines that the digital data cannot be utilized because the digital data utilizing device does not comply with the area limitation of the digital content, when the condition judging unit judges that the utilization of the digital content is prohibited.

With this construction, when the use of the digital content is prohibited because the area limitation is not met, the user is notified that the digital data utilizing device does not satisfy the area limitation of the digital content.

Here, the reason notifying unit may disconnect the digital data intelligent memory device from the digital data utilizing device by automatically ejecting the digital data intelligent memory device from the digital data utilizing device if the decryption judging unit judges that the management information decrypting unit has failed to decrypt the encrypted management information, and not disconnect the digital data intelligent memory device from the digital data utilizing device if the condition judging unit judges that the utilization of the digital content is prohibited.

With this construction, when the decryption of the encrypted management information has failed, the digital data intelligent memory device is automatically ejected from the digital data utilizing device.

Since the failure to decrypt the encrypted management information means the digital data intelligent memory device itself is unusable, ejecting the memory device is more convenient for the user who has no choice but to replace it with another memory device.

Here, the problem reporting unit may report the reason to the user through one of notification means that include a display capable of displaying characters and symbols, a light-emitting device capable of lighting up and flashing, a speaker capable of outputting voices and melodies, a beeper, a vibrator, and a device capable of initiating a mechanical operation that involves the digital data intelligent memory device, or through any combination of at least two of the notification means.

With this construction, the various notification methods can be employed to notify the user of the reason why the digital data cannot be used.

The invention also provides a digital data intelligent memory device for sending digital data to a digital data utilizing device that utilizes the digital data, including: a storing unit for storing the digital data; a connecting unit for connecting the digital data intelligent memory device with the digital data utilizing device; a mutual authenticating unit for authenticating the digital data utilizing device through an exchange of data with the digital data utilizing device, in mutual authentication between the digital data intelligent memory device and the digital data utilizing device, a digital data sending unit for sending the digital data to the digital data utilizing device when the mutual authenticating unit has succeeded in authenticating the digital data utilizing device, wherein the digital data is received by the digital data utilizing device when the digital data utilizing device has succeeded in authenticating the digital data intelligent memory device; and an authentication failure information sending unit for sending authentication failure information to the digital data utilizing device, when the mutual authenticating unit has failed to authenticate the digital data utilizing device.

With this construction, when the digital data intelligent memory device has failed to authenticate the digital data utilizing device, the digital data intelligent memory device sends the authentication failure information to the digital data utilizing device, with it being possible to notify the user of the invalidity of the digital data utilizing device through the notification means of the digital data utilizing device.

The invention also provides a digital data intelligent memory device for receiving digital data from a digital data recording device and storing the digital data, including: a Connecting unit for connecting the digital data intelligent memory device with the digital data recording device; a mutual authenticating unit for authenticating, in mutual authentication between the digital data intelligent memory device and the digital data recording device, the digital data recording device through an exchange of data with the digital data recording device, wherein the digital data recording device sends the digital data to the digital data intelligent memory device when the digital data recording device has succeeded in authenticating the digital data intelligent memory device; a receiving unit for receiving the digital data from the digital data recording device, when the mutual authenticating unit has succeeded in authenticating the digital data recording device; a storing unit for storing the digital data received by the receiving unit; and an authentication failure information sending unit for sending authentication failure information to the digital data recording device, when the mutual authenticating unit has failed to authenticate the digital data recording device.

With this Construction, when the digital data intelligent memory device has failed to authenticate the digital data recording device, the digital data intelligent memory device sends the authentication failure information to the digital data recording device, with it being possible to notify the user of the invalidity of the digital data recording device through the notification means of the digital data recording device.

The invention also provides a digital data recording device for sending digital data to a digital data intelligent memory device to record the digital data into the digital data intelligent memory device, including: a connecting unit for connecting the digital data recording device with the digital data intelligent memory device; an acquiring unit for acquiring the digital data; a sending unit for sending the acquired digital data to the digital data intelligent memory device connected with the digital data recording device; and a problem reporting unit for reporting to a user, when processing from the connection by the connecting unit to the sending by the sending unit is aborted at some point and the sending of the digital data becomes impossible, a reason why the digital data cannot be sent, based on at which point the processing is aborted.

With this construction, the digital data recording device reports to the user the reason why the digital data cannot be recorded, based on the point at which the processing is aborted.

Accordingly, when the digital data cannot be recorded due to the occurrence of some problem, the user can readily identify and appropriately handle the problem.

Here, the digital data recording device may further include a mutual authenticating unit for authenticating, before the sending of the digital data by the sending unit, the digital data intelligent memory device through an exchange of data with the digital data intelligent memory device, in mutual authentication between the digital data recording device and the digital data intelligent memory device, wherein the sending unit sends the digital data when the mutual authenticating unit has succeeded in authenticating the digital data intelligent memory device, wherein the digital data intelligent memory device receives the digital data when the digital data intelligent memory device has succeeded in authenticating the digital data recording device, and sends authentication failure information when the digital data intelligent memory device has failed to authenticate the digital data recording device, and wherein the problem reporting unit includes: an authentication failure information receiving unit for receiving the authentication failure information from the digital data intelligent memory device; a reason determining unit for determining that the digital data cannot be sent because the digital data intelligent memory device is invalid, when the mutual authenticating unit has failed to authenticate the digital data intelligent memory device, and determining that the digital data cannot be sent because the digital data recording device is invalid, when the authentication failure information receiving unit receives the authentication failure information; and a reason notifying unit for notifying the user of the reason determined by the reason determining unit.

With this construction, when the mutual authentication between the digital data recording device and the digital data intelligent memory device has failed, the user is notified which device is invalid.

Here, the problem reporting unit may report the reason to the user through one of notification means that include a display capable of displaying characters and symbols, a light-emitting device capable of lighting up and flashing, a speaker capable of outputting voices and melodies, a beeper, a vibrator, and a device capable of initiating a mechanical operation that involves the digital data intelligent memory device, or through any combination of at least two of the notification means.

With this construction, the various notification methods can be employed to notify the user of the reason why the digital data cannot be recorded.

The invention also provides a computer-readable storage medium storing a digital data utilizing program, used in a digital data utilizing device, for receiving digital data from a digital data intelligent memory device and utilizing the digital data, the program including: a connecting step for connecting the digital data utilizing device with the digital data intelligent memory device; a receiving step for receiving the digital data from the digital data intelligent memory device; a utilizing step for utilizing the digital data received in the receiving step; and a problem reporting step for reporting to a user, when processing from the connection in the connecting step to the utilization in the utilizing step is aborted at some point and the utilization of the digital data becomes impossible, a reason why the digital data cannot be utilized, based on at which point the processing is aborted.

With this construction, the reason why the digital data cannot be used is reported to the user based on the point at which the processing is aborted.

Accordingly, when the digital data cannot be used due to the occurrence of some problem, the user can readily identify and appropriately handle the problem.

The invention also provides a computer-readable storage medium storing a digital data recording program, used in a digital data recording device, for sending digital data to a digital data intelligent memory device to record the digital data into the digital data intelligent memory device, the program including: a connecting step for connecting the digital data recording device with the digital data intelligent memory device; an acquiring step for acquiring the digital data; a sending step for sending the acquired digital data to the digital data intelligent memory device; and a problem reporting step for reporting to a user, when processing from the connection in the connecting step to the sending in the sending step is aborted at some point and the sending of the digital data becomes impossible, a reason why the digital data cannot be sent, based on at which point the processing is aborted.

With this construction, the reason why the digital data cannot be recorded is reported to the user based on the point at which the processing is aborted.

Accordingly, when the digital data cannot be recorded due to the occurrence of some problem, the user can readily identify and appropriately deal with the problem.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the drawings:
Fig. 1 shows the constructions of a recorder 100, a memory card 120, and a player 140 according to an embodiment of the invention;
Fig. 2 shows the detailed constructions of an authenticating unit 102 in the recorder 100 and an authenticating unit 123 in the memory card 120;
Fig. 3 shows the detailed constructions of an authenticating unit 142 in the player 140 and the authenticating unit 123 in the memory card 120;
Fig. 4 is a flowchart showing an example operation of mutual authentication between the recorder 100 and the memory card 120;
Fig. 5 is a flowchart showing an example operation of recording digital content from the recorder 100 onto the memory card 120;
Fig. 6 is a flowchart showing an example operation of mutual authentication between the player 140 and the memory card 120;
Fig. 7 is a flowchart showing an example operation of reading digital content from the memory card 120 and utilizing it in the player 140;
Fig. 8 shows an example format for digital data made up of management information and digital content;
Fig. 9 is a flowchart showing an example operation of the player 140 in checking a service type limitation;
Fig. 10 is a flowchart showing an example operation of the player 140 in checking a limit on the number of types the digital content can be used;
Fig. 11 is a flowchart showing an example operation of the player 140 in checking a time limit for the use of the digital content;
Fig. 12 is a flowchart showing an example operation of the player 140 in checking a duplication status of the digital content;
Fig. 13 is a flowchart showing an example operation of the player 140 in checking a limitation on areas where the digital content can be used; and
Fig.14 shows the hardware construction of the player 140.

### DESCRIPTION OF THE PREFERRED EMBODIMENT(S)

### 1. Overview

The present invention is embodied as a device that, when digital content cannot be used due to the occurrence of some problem, produces a problem report which notifies the user of the cause of the problem by means of display and the like, thereby helping the user to react appropriately.

### 2. General Constructions

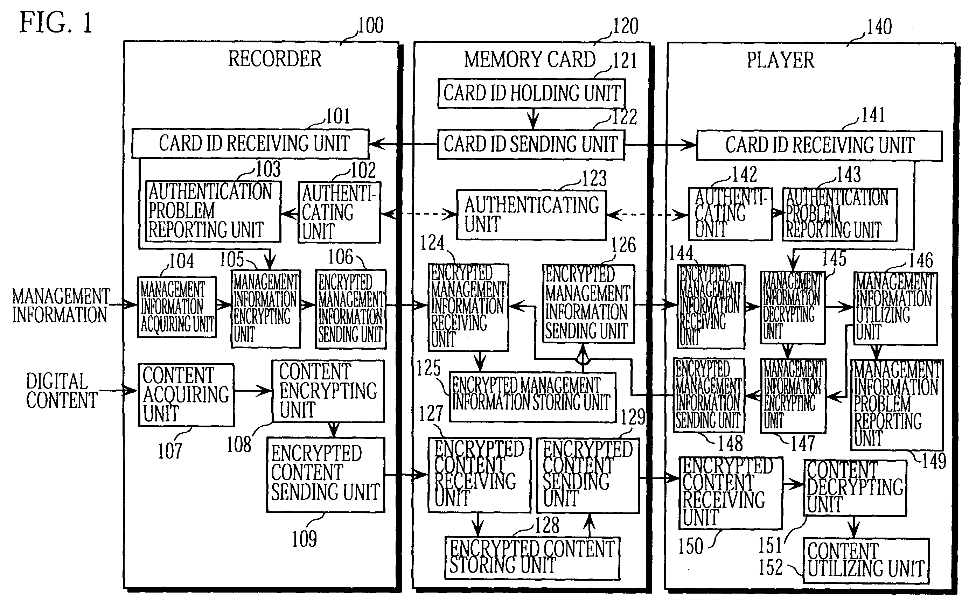

Fig. 1 shows the constructions of a recorder 100, a memory card 120, and a player 140 according to the embodiment of the invention. Note that it is also common to integrate the recorder 100 and the player 140 as a single unit, or to remove write functions from the memory card 120 to render it a reproduce-only product with store and reproduce functions only.

### 2.1. Construction of the Recorder 100

The recorder 100 acquires digital content, such as music information, and management information for the digital content from an external source, processes the digital content and the management information by encryption or the like for protection against unauthorized acts, and sends them to the memory card 120. The recorder 100 is roughly made up of a card ID receiving unit 101, an authenticating unit 102, an authentication problem reporting unit 103, a management information acquiring unit 104, a management information encrypting unit 105, an encrypted management information sending unit 106, a content acquiring unit 107, a content encrypting unit 108, and an encrypted content sending unit 109.

The card ID receiving unit 101 receives a card ID, such as an 8-byte card ID "0123456789ABCDEFH", from the memory card 120.

The authenticating unit 102 performs authentication to verify the authenticity of the memory card 120, through an exchange of data such as random numbers with an authenticating unit 123 in the memory card 120.

The authentication problem reporting unit 103 displays a problem report on a display unit such as an LCD (Liquid Crystal Display) equipped in the recorder 100, when the mutual authentication between the recorder 100 and the memory card 120 has failed. The authentication problem reporting unit 103 will be explained in detail later.

The management information acquiring unit 104 acquires management information, such as 8-byte management information "B38A800715CA8100H".

The management information encrypting unit 105 encrypts the acquired management information by a predetermined algorithm using the card ID received by the card ID receiving unit 101 as an encryption key, so as to protect the management information against tampering. The predetermined algorithm referred to here is a cipher, such as DES (Data Encryption Standard), that is specified by the encryption key.

The encrypted management information sending unit 106 sends the encrypted management information generated by the management information encrypting unit 105, to the memory card 120.

The content acquiring unit 107 acquires digital content.

The content encrypting unit 108 encrypts the acquired digital content by a predetermined block cipher. In this embodiment, after the digital content is divided into 8-byte blocks, each of the blocks is encrypted, and the encrypted blocks are concatenated to form encrypted digital content.

The encrypted content sending unit 109 sends the encrypted digital content generated by the content encrypting unit 108, to the memory card 120.

### 2.2. Construction of the Memory Card 120

The memory card 120 is an intelligent memory device equipped with a large-capacity semiconductor memory for storing encrypted digital content and encrypted management information, and a control circuit for the semiconductor memory. The memory card 120 is roughly made up of a card ID holding unit 121, a card ID sending unit 122, the authenticating unit 123, an encrypted management information receiving unit 124, an encrypted management information storing unit 125, an encrypted management information sending unit 126, an encrypted content receiving unit 127, an encrypted content storing unit 128, and an encrypted content sending unit 129.

The card ID holding unit 121 holds the card ID, such as the 8-byte card ID "0123456789ABCDEFH", which has been uniquely given to the memory card 120.

The card ID sending unit 122 sends the card ID held in the card ID holding unit 121, to the recorder 100 and the player 140.

The authenticating unit 123 performs authentication to verify the authenticity of the recorder 100, through an exchange of data such as random numbers with the authenticating unit 102 in the recorder 100. The authenticating unit 123 also performs authentication to verify the authenticity of the player 140, through an exchange of data such as random numbers with an authenticating unit 142 in the player 140.

The encrypted management information receiving unit 124 receives the encrypted management information from the recorder 100. The encrypted management information receiving unit 124 also receives encrypted management information from the player 140.

The encrypted management information storing unit 125 stores the encrypted management information received by the encrypted management information receiving unit 124, in its inside nonvolatile memory.

The encrypted management information sending unit 126 sends the encrypted management information stored in the encrypted management information storing unit 125, to the player 140.

The encrypted content receiving unit 127 receives the encrypted digital content from the recorder 100.

The encrypted content storing unit 128 stores the encrypted digital content received by the encrypted content receiving unit 127, in its inside nonvolatile memory.

The encrypted content sending unit 129 sends the encrypted digital content stored in the encrypted content storing unit 128, to the player 140.

### 2.3. Construction of the Player 140

The player 140 reads digital content such as music information and management information from the memory card 120 in their encrypted state, and utilizes these data by means of reproduction or the like. The player 140 is mainly made up of a card ID receiving unit 141, the authenticating unit 142, an authentication problem reporting unit 143, an encrypted management information receiving unit 144, a management information decrypting unit 145, a management information utilizing unit 146, a management information encrypting unit 147, an encrypted management information sending unit 148, a management information problem reporting unit 149, an encrypted content receiving unit 150, a content decrypting unit 151, and a content utilizing unit 152.

The card ID receiving unit 141 receives the card ID, such as the 8-byte card ID "0123456789ABCDEFH", from the memory card 120.

The authenticating unit 142 performs authentication to verify the authenticity of the memory card 120, through an exchange of data such as random numbers with the authenticating unit 123 in the memory card 120.

The authentication problem reporting unit 143 displays a problem report on a display unit such as an LCD equipped in the player 140, when the mutual authentication between the player 140 and the memory card 120 has failed. The details of the authentication problem reporting unit 143 will be explained later.

The encrypted management information receiving unit 144 receives the encrypted management information from the memory card 120.

The management information decrypting unit 145 decrypts the encrypted management information received by the encrypted management information receiving unit 144, by a predetermined algorithm using the card ID received by the card ID receiving unit 141 as a decryption key. The predetermined algorithm here is a cipher, such as DES, that is specified by the decryption key, and is the inverse of the encryption by the management information encrypting unit 105 in the recorder 100.

The management information utilizing unit 146 analyzes the management information generated by the management information decrypting unit 145, to control the use of the digital content in accordance with conditions set in the management information. If the management information contains information which needs to be updated, such as information on the number of times the digital content can be used, the management information utilizing unit 146 updates the management information accordingly and passes the updated management information to the management information encrypting unit 147. For instance, if the number of times the digital content can be used is limited to ten, the management information utilizing unit 146 decrements the number by 1 each time the digital content is used, and prohibits further use once the number reaches 0. Also, if the time limit for the use of the digital content is set at three weeks, the management information utilizing unit 146 prohibits further use once the three weeks have passed.

The management information encrypting unit 147 encrypts the updated management information by a predetermined algorithm using the card ID received by the card ID receiving unit 141 as an encryption key, so as to protect the management information against tampering. The predetermined algorithm here is a cipher, such as DES, that is specified by the encryption key.

The encrypted management information sending unit 148 sends the encrypted management information generated by the management information encrypting unit 147, to the memory card 120.

The management information problem reporting unit 149 displays a problem report on the display unit equipped in the player 140, when the management information decrypting unit 145 has failed to decrypt the encrypted management information or when the management information utilizing unit 146 finds that any of the conditions for the use of the digital content is not met. The management information problem reporting unit 149 will be explained in detail later.

The encrypted content receiving unit 150 receives the encrypted digital content from the memory card 120.

The content decrypting unit 151 decrypts the encrypted digital content according to a predetermined block cipher which is the inverse of the encryption by the content encrypting unit 108 in the recorder 100. In this embodiment, after the encrypted digital content is divided into 8-byte blocks, each of the encrypted blocks is decrypted, and the decrypted blocks are concatenated to form the digital content.

The content utilizing unit 152 utilizes the digital content (e.g. playback of music) generated by the content decrypting unit 151.

### 2.4. Detailed Constructions of the Authenticating Units 102, 123, and 142

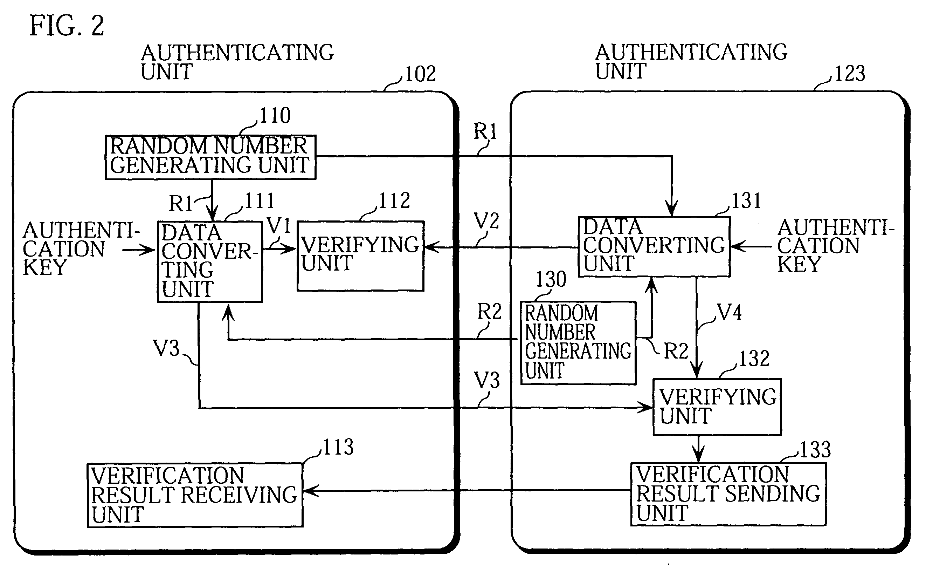

Fig. 2 shows the detailed constructions of the authenticating unit 102 in the recorder 100 and the authenticating unit 123 in the memory card 120.

In the figure, the authenticating unit 102 includes a random number generating unit 110, a data converting unit 111, a verifying unit 112, and a verification result receiving unit 113.

Likewise, the authenticating unit 123 includes a random number generating unit 130, a data converting unit 131, a verifying unit 132, and a verification result sending unit 133.

The random number generating unit 110 in the authenticating unit 102 generates random number R1, passes it to the data converting unit 111, and also sends it to the data converting unit 131 in the authenticating unit 123.

The random number generating unit 130 in the authenticating unit 123 generates random number R2, passes it to the data converting unit 131, and also sends it to the data converting unit 111 in the authenticating unit 102.

The data converting unit 111 in the authenticating unit 102 receives random number R1 from the random number generating unit 110, performs data conversion specified by an authentication key of the authenticating unit 102 on random number R1 to generate verification data V1, and passes it to the verifying unit 112. The data converting unit 111 also receives random number R2 from the random number generating unit 130 in the authenticating unit 123 unless a timeout is detected, performs the data conversion specified by the authentication key on random number R2 to generate verification data V3, and sends it to the verifying unit 132 in the authenticating unit 123.

The data converting unit 131 in the authenticating unit 123 receives random number R2 from the random number generating unit 130, performs data conversion specified by an authentication key of the authenticating unit 123 on random number R2 to generate verification data V4, and passes it to the verifying unit 132. The data converting unit 131 also receives random number R1 from the random number generating unit 110 in the authenticating unit 102, performs the data conversion specified by the authentication key on random number R1 to generate verification data V2, and sends it to the verifying unit 112 in the authenticating unit 102.

Here, if the recorder 100 and the memory card 120 are both valid devices, then the authentication key and the data conversion in the authenticating unit 102 are respectively the same as the authentication key and the data conversion in the authenticating unit 123.

The verifying unit 112 in the authenticating unit 102 receives verification data V1 from the data converting unit 111. The verifying unit 112 also receives verification data V2 from the data converting unit 131 in the authenticating unit 123 unless a timeout is detected. The verifying unit 112 then compares verification data V1 and verification data V2 to verify the validity of the memory card 120.

The verifying unit 132 in the authenticating unit 123 receives verification data V4 from the data converting unit 131, and receives verification data V3 from the data converting unit 111 in the authenticating unit 102. The verifying unit 132 compares verification data V4 and verification data V3 to verify the validity of the recorder 100.

The verification result sending unit 133 in the authenticating unit 123 sends the result of the verification by the verifying unit 132 to the verification result receiving unit 113 in the authenticating unit 102.

The verification result receiving unit 113 in the authenticating unit 102 receives the verification result from the verification result sending unit 133, unless a timeout is detected.

Here, if a timeout is detected in any of the data converting unit 111, the verifying unit 112, and the verification result receiving unit 113 in the authenticating unit 102, the authentication problem reporting unit 103 in the recorder 100 displays a problem report which notifies the user of the failure of the memory card 120, and aborts the processing. If the verifying unit 112 has failed to verify the memory card 120 (i.e. verification data V1 and verification data V2 do not match), the authentication problem reporting unit 103 displays a problem report which notifies the user of the invalidity of the memory card 120, and aborts the processing. If the verification result received by the verification result receiving unit 113 shows that the verifying unit 132 has failed to verify the recorder 100, the authentication problem reporting unit 103 displays a problem report which notifies the user of the invalidity of the recorder 100.

When and only when the verification result by the verifying unit 112 and the verification result received by the verification result receiving unit 113 are both successful, the recorder 100 proceeds to the recording of management information and digital content.

Likewise, when and only when the verification result by the verifying unit 132 is successful, the memory card 120 proceeds to the recording of management information and digital content.

Here, since a memory card is in general not equipped with a display unit, the verification result produced in the memory card 120 is sent to the recorder 100 which is equipped with the display unit.

Note that the recorder 100 and the memory card 120 may retain their authentication keys beforehand or generate them from the card ID of the memory card 120, though this is not the main feature of the invention and so its explanation has been omitted here.

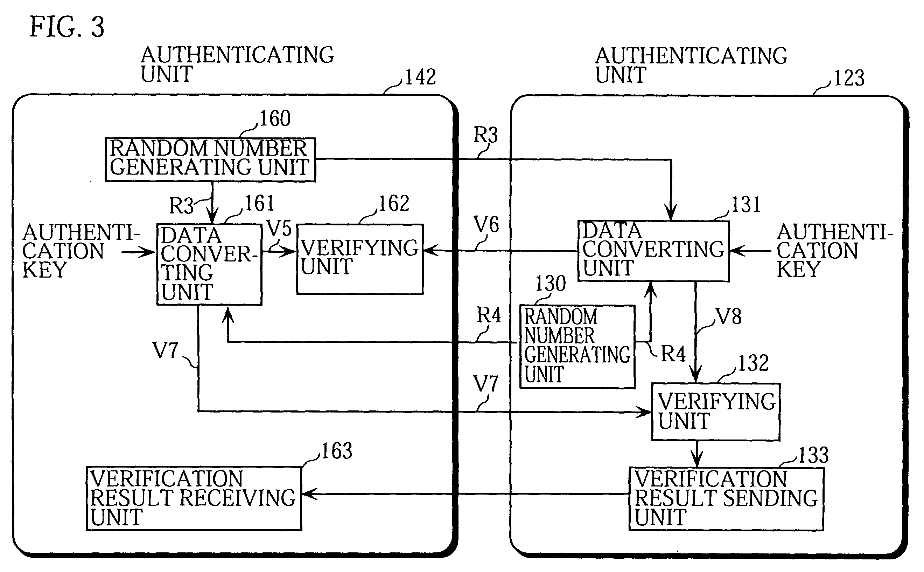

Fig. 3 shows the detailed constructions of the authenticating unit 142 in the player 140 and the authenticating unit 123 in the memory card 120.

In the figure, the authenticating unit 142 includes a random number generating unit 160, a data converting unit 161, a verifying unit 162, and a verification result receiving unit 163. These construction elements and their functions are similar to those in the authenticating unit 102 in Fig. 2.

The authenticating unit 123 shown in Fig. 3 is the same as that shown in Fig. 2.

The random number generating unit 160 in the authenticating unit 142 has a function analogous to the random number generating unit 110 in Fig. 2. The random number generating unit 160 generates random number R3, passes it to the data converting unit 161, and also sends it to the data converting unit 131 in the authenticating unit 123.

The random number generating unit 130 in the authenticating unit 123 generates random number R4, passes it to the data converting unit 131, and also sends it to the data converting unit 161 in the authenticating unit 142.

The data converting unit 161 in the authenticating unit 142 has a function analogous to the data converting unit 111 in Fig. 2. The data converting unit 161 receives random number R3 from the random number generating unit 160, performs data conversion specified by an authentication key of the authenticating unit 142 on random number R3 to generate verification data V5, and passes it to the verifying unit 162. The data converting unit 161 also receives random number R4 from the random number generating unit 130 in the authenticating unit 123 unless a timeout is detected, performs the data conversion specified by the authentication key on random number R4 to generate verification data V7, and sends it to the verifying unit 132 in the authenticating unit 123.

The data converting unit 131 in the authenticating unit 123 receives random number R4 from the random number generating unit 130, performs data conversion specified by an authentication key of the authenticating unit 123 on random number R4 to generate verification data V8, and passes it to the verifying unit 132. The data converting unit 131 also receives random number R3 from the random number generating unit 160 in the authenticating unit 142, performs the data conversion specified by the authentication key on random number R3 to generate verification data V6, and sends it to the verifying unit 162 in the authenticating unit 142.

Here, if the player 140 and the memory card 120 are both valid devices, then the authentication key and the data conversion in the authenticating unit 142 are respectively identical to the authentication key and the data conversion in the authenticating unit 123.

The verifying unit 162 in the authenticating unit 142 has a function analogous to the verifying unit 112 in Fig. 2. The verifying unit 162 receives verification data V5 from the data converting unit 161. The verifying unit 162 also receives verification data V6 from the data converting unit 131 in the authenticating unit 123 unless a timeout is detected. The verifying unit 162 then compares verification data V5 and verification data V6 to verify the validity of the memory card 120.

The verifying unit 132 in the authenticating unit 123 receives verification data V8 from the data converting unit 131, and receives verification data V7 from the data converting unit 161 in the authenticating unit 142. The verifying unit 132 compares verification data V8 and verification data V7 to verify the validity of the player 140.

The verification result sending unit 133 sends the result of the verification by the verifying unit 132 to the verification result receiving unit 163 in the authenticating unit 142.

The verification result receiving unit 163 in the authenticating unit 142 has a function analogous to the verification result receiving unit 113 in Fig. 2. The verification result receiving unit 163 receives the verification result from the verification result sending unit 133, unless a timeout is detected.

The authentication problem reporting unit 143 in the player 140 operates in the same manner as the authentication problem reporting unit 103 in the recorder 100.

Which is to say, if a timeout is detected in any of the data converting unit 161, the verifying unit 162, and the verification result receiving unit 163 in the authenticating unit 142, the authentication problem reporting unit 143 displays a problem report notifying the user of the failure of the memory card 120, and aborts the processing. If the verifying unit 162 has failed to verify the memory card 120 (i.e. verification data V5 and verification data V6 do not match), the authentication problem reporting unit 143 displays a problem report notifying the user of the invalidity of the memory card 120, and aborts the processing. If the verification result received by the verification result receiving unit 163 shows that the verifying unit 132 has failed to verify the player 140, the authentication problem reporting unit 143 displays a problem report notifying the user of the invalidity of the player 140.

When and only when the verification result by the verifying unit 162 and the verification result received by the verification result receiving unit 163 are both successful, the player 140 proceeds to the utilization of management information and digital content.

Likewise, when and only when the verification result by the verifying unit 132 is successful, the memory card 120 proceeds to the utilization of management information and digital content.

The reason to send the verification result from the memory card 120 to the player 140 is the same as that explained in the mutual authentication between the recorder 100 and the memory card 120.

Note that the player 140 and the memory card 120 may retain their authentication keys beforehand or generate them from the card ID of the memory card 120, though this is not the main feature of the invention and so its explanation has been omitted here.

### 3. Record Operation by the Recorder 100 and the Memory card 120

The following is an explanation on how the recorder 100 and the memory card 120 operate to record digital content.

A typical application is that a computer connected to the recorder 100 downloads digital content such as music data via the Internet and records it onto the memory card 120 through the recorder 100.

### 3.1. Mutual Authentication

Before recording the digital content from the recorder 100 onto the memory card 120, mutual authentication is performed between the recorder 100 and the memory card 120 to verify each other's authenticity.

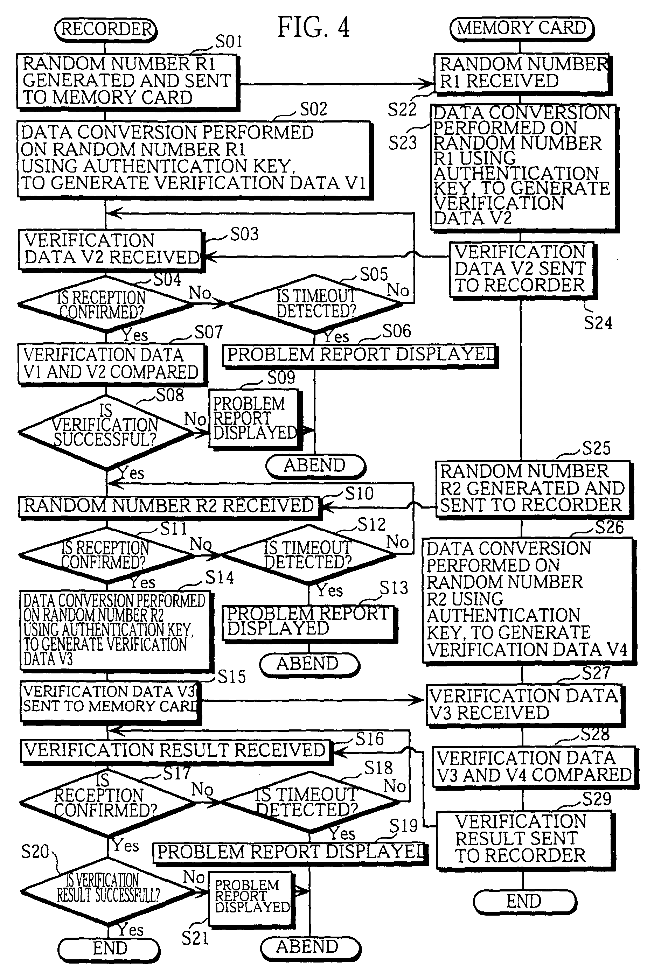

Fig. 4 is a flowchart showing an example operation of the mutual authentication between the recorder 100 and the memory card 120.

This mutual authentication between the recorder 100 and the memory card 120 is explained below, with reference to Figs. 2 and 4.
(1) The random number generating unit 110 in the authenticating unit 102 generates random number R1 and sends it to the data converting unit 131 in the authenticating unit 123 (S01).
(2) The data converting unit 111 in the authenticating unit 102 performs the data conversion specified by the authentication key on random number R1, and thereby generates verification data V1 (S02).
(3) The data converting unit 131 in the authenticating unit 123 receives random number R1 (S22).
(4) The data converting unit 131 performs the data conversion specified by the authentication key on random number R1, and thereby generates verification data V2 (S23).
(5) The data converting unit 131 sends verification data V2 to the verifying unit 112 in the authenticating unit 102 (S24).
(6) The verifying unit 112 receives verification data V2 unless a timeout is detected (S03∼S05).
(7) If the timeout is detected in step S05, the authentication problem reporting unit 103 in the recorder 100 displays a problem report informing the user of the failure of the memory card 120 (S06), and aborts the processing (ABEND). For example, a message such as "Memory Card Failure: No Response to Device Authentication: First Receive Time Out" is displayed on the LCD equipped in the recorder 100.
(8) When the reception of verification data V2 is confirmed in step S04, the verifying unit 112 compares verification data V1 and verification data V2 (S07).
(9) If the verification by the verifying unit 112 is not successful (i.e. verification data V1 and verification data V2 do not match) (S08), the authentication problem reporting unit 103 in the recorder 100 displays a problem report informing the user of the invalidity of the memory card 120 (S09), and aborts the processing (ABEND). For example, a message such as "Memory Card Invalid: Authentication Failed" is displayed on the LCD in the recorder 100.
(10) The random number generating unit 130 in the authenticating unit 123 generates random number R2 and sends it to the data converting unit 111 in the authenticating unit 102 (S25).
(11) If the verification by the verifying unit 112 is successful, the data converting unit 111 receives random number R2 unless a timeout is detected (S10∼S12).
(12) If the timeout is detected in step S12, the authentication problem reporting unit 103 in the recorder 100 displays a problem report informing the user of the failure of the memory card 120 (S13), and aborts the processing (ABEND). For example, a message such as "Memory Card Failure: No Response to Device Authentication: Second Receive Time Out" is displayed on the LCD in the recorder 100.
(13) When the reception of random number R2 is confirmed in step S11, the data converting unit 111 performs the data conversion specified by the authentication key on random number R2, and thereby generates verification data V3 (S14).
(14) The data converting unit 111 sends verification data V3 to the verifying unit 132 in the authenticating unit 123 (S15).
(15) The data converting unit 131 in the authenticating unit 123 performs the data conversion specified by the authentication key on random number R2, and thereby generates verification data V4 (S26).
(16) The verifying unit 132 in the authenticating unit 123 receives verification data V3 from the data converting unit 111 (S27).
(17) The verifying unit 132 compares verification data V4 and verification data V3 (S28).
(18) The verification result sending unit 133 sends the result of the verification by the verifying unit 132 to the verification result receiving unit 113 in the authenticating unit 102 (S29).
(19) The verification result receiving unit 113 receives the verification result unless a timeout is detected (S16∼S18).
(20) If the timeout is detected in step S18, the authentication problem reporting unit 103 in the recorder 100 displays a problem report informing the user of the failure of the memory card 120 (S19), and aborts the processing (ABEND). For example, a message such as "Memory Card Failure: No Response to Device Authentication: Third Receive Time Out" is displayed on the LCD in the recorder 100.
(21) When the reception of the verification result is confirmed in step S17, it is judged whether the received verification result shows successful verification (S20).
(22) If the verification result is not successful, the authentication problem reporting unit 103 in the recorder 100 displays a problem report informing the user of the invalidity of the recorder 100 (S21), and aborts the processing (ABEND). For example, a message such as "Recorder Invalid: Authentication Failed" is displayed on the LCD in the recorder 100.
(23) If the verification result is successful, the recorder 100 and the memory card 120 proceed to the recording of management information and digital content.

### 3.2. Recording of Management Information and Digital Content

Once the mutual authentication has been established between the recorder 100 and the memory card 120, the two devices commence the recording of management information and digital content.

As described earlier, digital content such as music data is accompanied by management information which shows conditions, such as a service type limitation and a limitation on the number of times the digital content can be used, for the use of the digital content. With such management information, it is possible to limit the use of the digital content to certain types of devices, or to limit the number of times the digital content can be used free of charge.

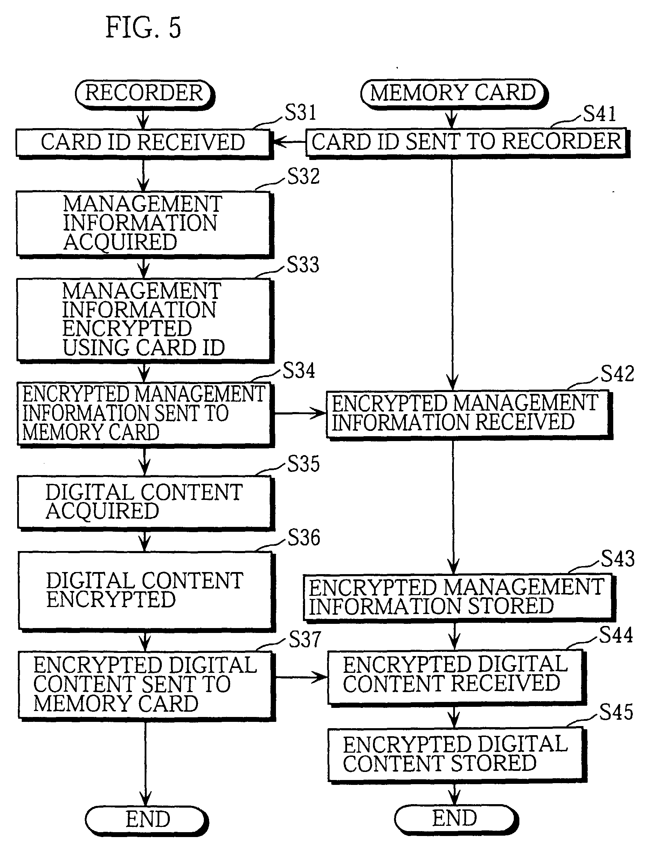

Fig. 5 is a flowchart showing an example operation of recording management information and digital content from the recorder 100 onto the memory card 120.

This operation by the recorder 100 and the memory card 120 is explained below with reference to Figs. 1 and 5.
(1) The card ID sending unit 122 in the memory card 120 sends a card ID "CID" held in the card ID holding unit 121, to the recorder 100 (S41). Here, the 8-byte card ID "0123456789ABCDEFH" is sent to the recorder 100.
(2) The card ID receiving unit 101 in the recorder 100 receives the card ID "CID" from the memory card 120 (S31).
(3) The management information acquiring unit 104 in the recorder 100 acquires management information "Lic" (S32). Here, the 8-byte management information "B38A800715CA8100H" is acquired.
(4) The management information encrypting unit 105 in the recorder 100 encrypts the management information "Lic" by a predetermined algorithm "E" using the card ID "CID" as an encryption key. As a result, encrypted management information "E(CID,Lic)" is generated (S33). Here, the management information "B38A800715CA8100H" is encrypted using the card ID "0123456789ABCDEFH" to generate 8-byte encrypted management information.
(5) The encrypted management information sending unit 106 in the recorder 100 sends the encrypted management information "E(CID,Lic)" to the memory card 120 (S34).
(6) The encrypted management information receiving unit 124 in the memory card 120 receives the encrypted management information "E(CID,Lic)" from the recorder 100 (S42).
(7) The encrypted management information storing unit 125 in the memory card 120 stores the encrypted management information "E(CID,Lic)" into its inside nonvolatile memory (S43).
(8) The content acquiring unit 107 in the recorder 100 acquires digital content "Con" (S35). Here, 1-Mbyte digital content is acquired.
(9) The content encrypting unit 108 in the recorder 100 encrypts the acquired digital content "Con" according to a predetermined block cipher "E". As a result, encrypted digital content "E(Con)" is generated (S36). Here, after the 1-Mbyte digital content is divided into blocks of 8 bytes, each of the blocks is encrypted, and the encrypted blocks are concatenated to form 1-Mbyte encrypted digital content.
(10) The encrypted content sending unit 109 in the recorder 100 sends the encrypted digital content "E(Con)" to the memory card 120 (S37).
(11) The encrypted content receiving unit 127 in the memory card 120 receives the encrypted digital content "E(Con)" from the recorder 100 (S44).
(12) The encrypted content storing unit 128 in the memory card 120 stores the encrypted digital content "E(Con)" into its inside nonvolatile memory (S45).

### 4. Utilize Operation by the Player 140 and the Memory Card 120

The following is an explanation on how the player 140 and the memory card 120 operate to utilize digital content.

A typical application is the playback of the digital content such as music data recorded on the memory card 120 by the player 140, or the duplication (dubbing) of the digital content by the player 140 connected with another recorder.

### 4.1. Mutual Authentication

Before the player 140 reads digital content from the memory card 120 and utilizes it, mutual authentication is performed between the player 140 and the memory card 120 to verify each other's authenticity.

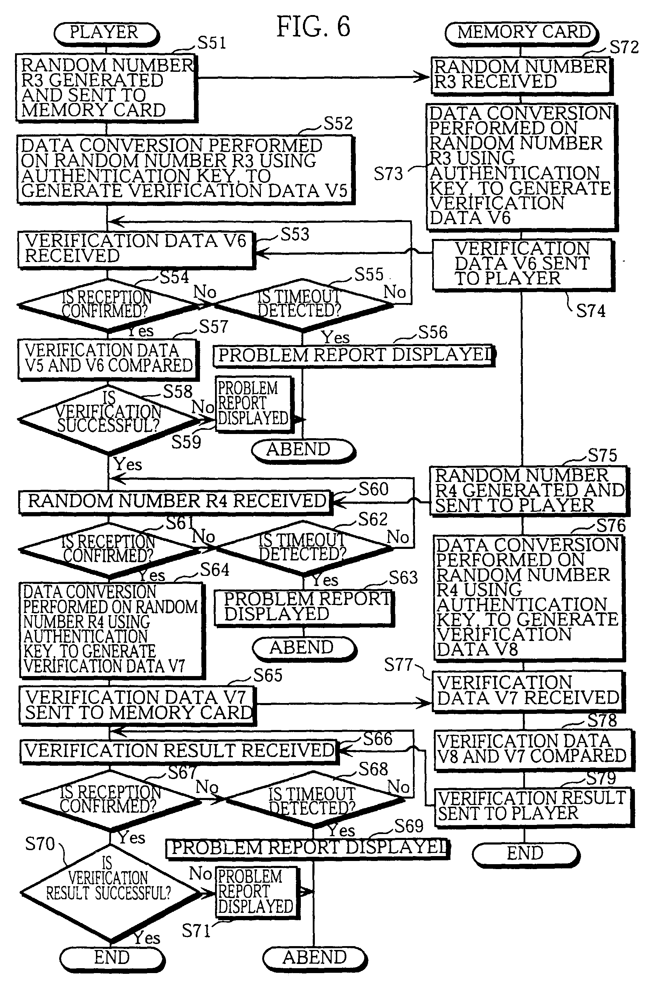

Fig. 6 is a flowchart showing an example operation of the mutual authentication between the player 140 and the memory card 120. This mutual authentication is similar to that between the recorder 100 and the memory card 120.

The mutual authentication between the player 140 and the memory card 120 is explained below, with reference to Figs. 3 and 6.
(1) The random number generating unit 160 in the authenticating unit 142 generates random number R3 and sends it to the data converting unit 131 in the authenticating unit 123 (S51).
(2) The data converting unit 161 in the authenticating unit 142 performs data conversion specified by the authentication key on random number R3, to generate verification data V5 (S52).
(3) The data converting unit 131 in the authenticating unit 123 receives random number R3 (S72).
(4) The data converting unit 131 performs data conversion specified by the authentication key on random number R3, to generate verification data V6 (S73).
(5) The data converting unit 131 sends verification data V6 to the verifying unit 162 in the authenticating unit 142 (S74).
(6) The verifying unit 162 receives verification data V6 unless a timeout is detected (S53∼S55).
(7) If the timeout is detected in step S55, the authentication problem reporting unit 143 in the player 140 displays a problem report informing the user of the failure of the memory card 120 (S56), and aborts the processing (ABEND). For example, a message such as "Memory Card Failure: No Response to Device Authentication: First Receive Time Out" is displayed on the LCD equipped in the player 140.
(8) When the reception of verification data V6 is confirmed in step S54, the verifying unit 162 compares verification data V5 and verification data V6 (S57).
(9) If the verification by the verifying unit 162 is not successful (i.e. verification data V5 and verification data V6 do not match) (S58), the authentication problem reporting unit 143 in the player 140 displays a problem report informing the user of the invalidity of the memory card 120 (S59), and aborts the processing (ABEND). For example, a message such as "Memory Card Invalid: Authentication Failed" is displayed on the LCD in the player 140.
(10) The random number generating unit 130 in the authenticating unit 123 generates random number R4 and sends it to the data converting unit 161 in the authenticating unit 142 (S75).
(11) If the verification by the verifying unit 162 is successful, the data converting unit 161 receives random number R4 unless a timeout is detected (S60∼S62).
(12) If the timeout is detected in step S62, the authentication problem reporting unit 143 in the player 140 displays a problem report informing the user of the failure of the memory card 120 (S63), and aborts the processing (ABEND). For example, a message such as "Memory Card Failure: No Response to Device Authentication: Second Receive Time Out" is displayed on the LCD in the player 140.
(13) When the reception of random number R4 is confirmed in step S61, the data converting unit 161 performs the data conversion specified by the authentication key on random number R4, to generate verification data V7 (S64).
(14) The data converting unit 161 sends verification data V7 to the verifying unit 132 in the authenticating unit 123 (S65).
(15) The data converting unit 131 in the authenticating unit 123 performs the data conversion specified by the authentication key on random number R4, to generate verification data V8 (S76).
(16) The verifying unit 132 in the authenticating unit 123 receives verification data V7 from the data converting unit 161 (S77).
(17) The verifying unit 132 compares the verification data V8 and the verification data V7 (S78).
(18) The verification result sending unit 133 in the authenticating unit 123 sends the result of the verification by the verifying unit 132 to the verification result receiving unit 163 in the authenticating unit 142 (S79).
(19) The verification result receiving unit 163 receives the verification result unless a timeout is detected (S66∼S68).
(20) If the timeout is detected in step S68, the authentication problem reporting unit 143 in the player 140 displays a problem report informing the user of the failure of the memory card 120 (S69), and aborts the processing (ABEND). For example, a message such as "Memory Card Failure: No Response to Device Authentication: Third Receive Time Out" is displayed on the LCD in the player 140.
(21) When the reception of the verification result is confirmed in step S67, it is judged whether the received verification result is successful (S70).
(22) If the verification result is not successful, the authentication problem reporting unit 143 in the player 140 displays a problem report informing the user of the invalidity of the player 140 (S71), and aborts the processing (ABEND). For example, a message such as "Player Invalid: Authentication Failed" is displayed on the LCD in the player 140.
(23) If the verification result is successful, the player 140 and the memory card 120 proceed to the utilization of management information and digital content.

### 4.2. Utilization of Management Information and Digital Content

Once the mutual authentication has been established between the player 140 and the memory card 120, the two devices commence the utilization of management information and digital content.

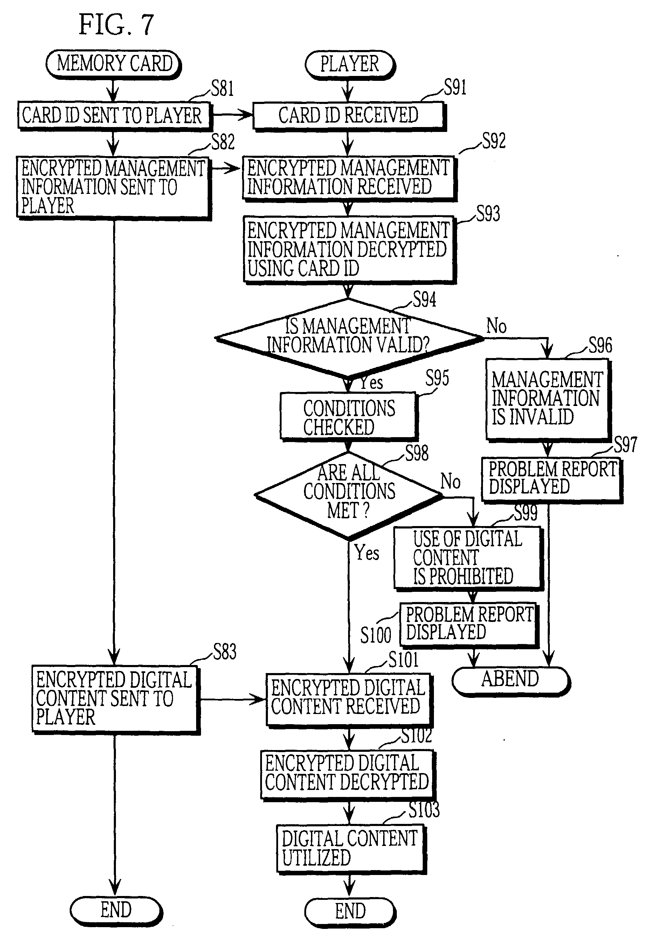

Fig. 7 is a flowchart showing an example operation of reading management information and digital content from the memory card 120 and utilizing them in the player 140.

This operation by the player 140 and the memory card 120 is explained below with reference to Figs. 1 and 7.
(1) The card ID sending unit 122 in the memory card 120 sends the card ID "CID" held in the card ID holding unit 121, to the player 140 (S81). Here, the 8-byte card ID "0123456789ABCDEFH" is sent to the player 140.
(2) The card ID receiving unit 141 in the player 140 receives the card ID "CID" from the memory card 120 (S91).
(3) The encrypted management information sending unit 126 in the memory card 120 sends the encrypted management information "E(CID,Lic)" stored in the encrypted management information storing unit 125, to the player 140 (S82).
(4) The encrypted management information receiving unit 144 in the player 140 receives the encrypted management information "E(CID,Lic)" from the memory card 120 (S92).
(5) The management information decrypting unit 145 in the player 140 decrypts the encrypted management information "E(CID,Lic)" by a predetermined algorithm using the card ID "CID" as a decryption key. As a result, the management information "Lic" is obtained (S93). Here, the 8-byte encrypted management information is decrypted with the card ID "0123456789ABCDEFH" into the 8-byte management information "B38A800715CA8100H".
(6) The management information utilizing unit 146 in the player 140 judges whether the management information decrypting unit 145 has succeeded in decrypting the encrypted management information "E(CID,Lic)" into the management information "Lic" (S94).
(7) If the management information decrypting unit 145 has succeeded in decrypting the encrypted management information, the management information utilizing unit 146 checks what conditions are set in the management information for the use of the digital content (S95).
(8) If the management information decrypting unit 145 has failed to decrypt the encrypted management information, the management information utilizing unit 146 judges that the management information obtained in step S93 is invalid (S96). Accordingly, the management information problem reporting unit 149 in the player 140 displays a problem report informing the user of the invalidity of the management information (S97) and aborts the processing (ABEND). For example, a message such as "Management Information Invalid: Decryption Failed" is displayed on the LCD in the player 140. The failure of the decryption means either the management information itself has been falsified or the encrypted management information has been illegally copied onto the memory card 120 from another memory card and so cannot be decrypted with the card ID of the memory card 120.
(9) The management information utilizing unit 146 judges whether all of the conditions are met (S98).
(10) If all of the conditions are met, the management information utilizing unit 146 judges that the use of the digital content is permitted, and proceeds to the decryption of the encrypted digital content.
(11) If any of the conditions is not met, the management information utilizing unit 146 judges that the use of the digital content is prohibited (S99), and the management information problem reporting unit 149 displays a problem report informing the user of the failure to meet a condition (S100), and aborts the processing (ABEND). For example, a message such as "Condition Not Met:..... " is displayed on the LCD in the player 140. The method of checking the conditions will be explained in detail later.
(12) The encrypted content sending unit 129 in the memory card 120 sends the encrypted digital content "E(Con)" stored in the encrypted content storing unit 128, to the player 140 (S83).
(13) The encrypted content receiving unit 150 in the player 140 receives the encrypted digital content "E(Con)" from the memory card 120 (S101).
(14) The content decrypting unit 151 in the player 140 decrypts the encrypted digital content "E(Con)" according to a predetermined block cipher, as a result of which the digital content "Con" is obtained (S102). Here, after the 1-Mbyte encrypted digital content is divided into 8-byte blocks, each of the encrypted blocks is decrypted, and the decrypted blocks are concatenated to form the 1-Mbyte digital content.
(15) The content utilizing unit 152 in the player 140 utilizes the digital content "Con" for musical reproduction and the like (S103).

### 5. Method of Checking the Conditions

The method of checking the conditions for the use of the digital content is explained here.

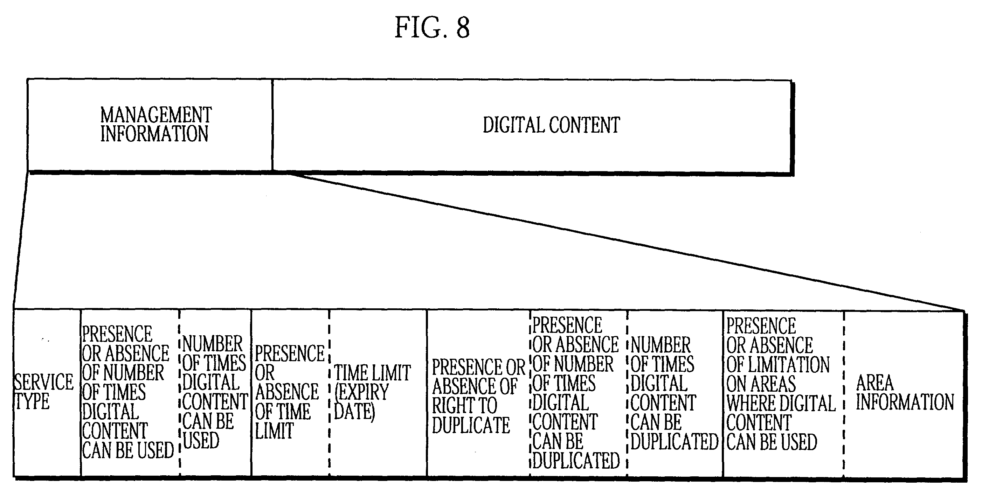

Fig. 8 shows an example format for digital data made up of management information and digital content. Here, the management information is set as "B38A800715CA8100H".

As illustrated, the management information shows information on the service type (the first byte, e.g. "B3H"), the presence or absence of a limit on the number of times the digital content can be used (the most significant bit of the second byte, e.g. "1"), the number of times the digital content can be used (the rest of the second byte, e.g. "0AH"), the presence or absence of a time limit for the use of the digital content (the most significant bit of the third byte, e.g. "1"), the time limit (expiry date) (the rest of the third byte to the fifth byte, e.g. "000715H"), the presence or absence of a right to duplicate (the most significant bit of the sixth byte, e.g. "1"), the presence or absence of a limit on the number of times the digital content can be duplicated (the second-order bit of the sixth byte, e.g. "1"), the number of times the digital content can be duplicated (the rest of the sixth byte, e.g. "0AH"), the presence or absence of a limit on areas where the digital content can be used (the most significant bit of the seventh byte, e.g. "1"), and area information (the rest of the seventh byte to the eighth byte, e.g. "0100H").

### 5.1. Service Type

When there are a plurality of copyright holders of digital data such as music data, with separate services such as data formats being defined for these copyrighted digital data and players of these digital data, a service type is designated in the management information to show which service the digital content is compatible with. In this case, the player 140 prestores service information showing a service which the device is compatible with. The service information is, for example, written in a nonvolatile memory in the player 140 at the time of manufacturing.

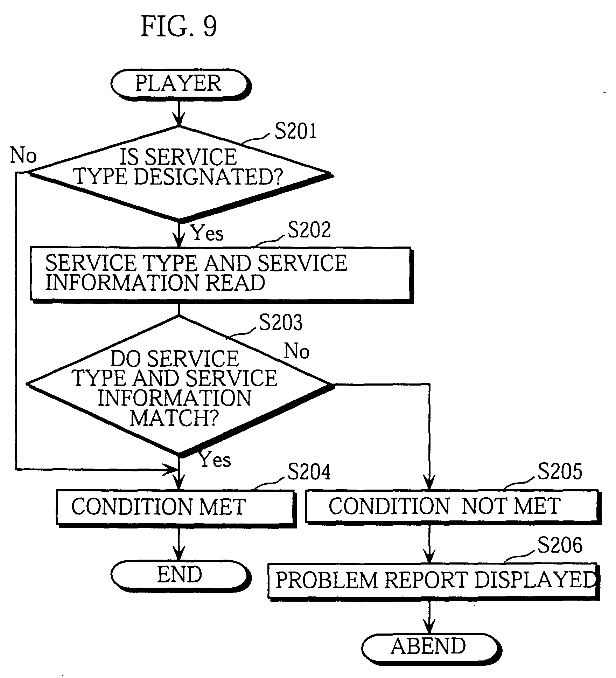

Fig. 9 is a flowchart showing an example operation of the player 140 in checking the service type.
(1) The management information utilizing unit 146 checks whether a service type is designated (S201) based on, for instance, a bit showing the presence or absence of a service type limitation in the management information. In the example in Fig. 8, the most significant bit of the first byte showing the service type is "1", which means there is a service type limitation. If the most significant bit is "0", there is no service type limitation.
(2) When a service type is designated in the management information, the management information utilizing unit 146 refers to the designated service type in the management information, and also refers to the service information stored in the nonvolatile memory in the player 140 (S202).
(3) The management information utilizing unit 146 checks whether the service type and the service information match (S203).
(4) If they match, or if there is no service type limitation, the management information utilizing unit 146 judges that the condition on the service type is met (S204).
(5) If they do not match, the management information utilizing unit 146 judges that the condition is not met and so the use of the digital content is prohibited (S205).
(6) If the management information utilizing unit 146 judges that the condition is not met, the management information problem reporting unit 149 displays a problem report notifying the user that the player 140 does not provide the service compatible with the digital content (S206). For example, a message such as "Condition Not Met: Service Incompatible" is displayed on the LCD in the player 140.

### 5.2. Number of Times the Digital Content Can Be Used

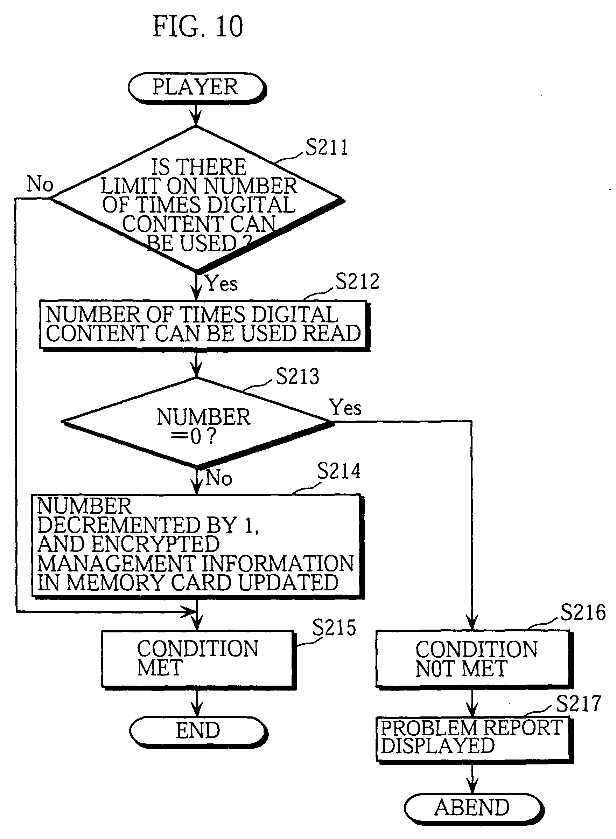

Fig. 10 is a flowchart showing an example operation of the player 140 in checking the number of times the digital content can be used.
(1) The management information utilizing unit 146 checks whether there is a limit on the number of times the digital content can be used (S211) based on, for instance, a bit showing the presence or absence of such a limit in the management information. In the example in Fig. 8, the most significant bit of the second byte showing the presence or absence of the number of times the digital content can be used is "1", which means there is a limit on the number of times the digital content can be used. If the most significant bit is "0", there is no such limit.
(2) If there is a limit on the number of times the digital content can be used, the management information utilizing unit 146 refers to the number in the management information (S212).
(3) The management information utilizing unit 146 checks whether the number is 0 (S213).
(4) If the number is not 0, the management information utilizing unit 146 decrements the number by 1. After this, the management information encrypting unit 147 encrypts the management information, the encrypted management information sending unit 148 sends the encrypted management information to the encrypted management information receiving unit 124 in the memory card 120, and the encrypted management information storing unit 125 replaces the encrypted management information stored therein with the encrypted management information received by the encrypted management information receiving unit 124 (S214).
(5) If the number is not 0 or if there is no limit on the number of times the digital content can be used, the management information utilizing unit 146 judges that the condition on the number of times the digital content can be used is met (S215).
(6) If the number is 0, the management information utilizing unit 146 judges that the condition is not met and the use of the digital content is prohibited (S216).
(7) If the management information utilizing unit 146 judges that the condition is not met, the management information problem reporting unit 149 displays a problem report notifying the user that no further use of the digital content is permitted (S217). For example, a message such as "Condition Not Met: No Further Use Permitted" is displayed on the LCD in the player 140.

Though in this embodiment the information on the number of times the digital content can be used is updated in the memory card 120 before the digital content is used, the information may be updated after the digital content is used.

### 5.3. Time Limit

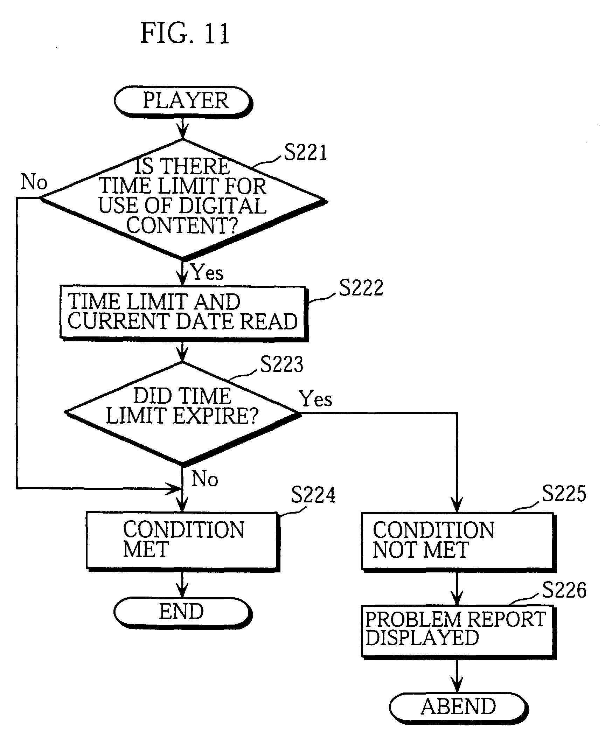

Fig. 11 is a flowchart showing an example operation of the player 140 in checking the time limit for the use of the digital content.
(1) The management information utilizing unit 146 checks whether there is a time limit for the use of the digital content (S221) based on, for instance, a bit showing the presence or absence of a time limit in the management information. In the example in Fig. 8, the most significant bit of the third byte showing the presence or absence of a time limit is "1", which means there is a time limit for the use of the digital content. If the most significant bit is "0", there is no time limit for the use of the digital content.
(2) If there is a time limit imposed on the use of the digital content, the management information utilizing unit 146 refers to the time limit (expiry date) in the management information, and also refers to current date information shown by a clock equipped in the player 140 (S222).
(3) The management information utilizing unit 146 checks whether the time limit expired (S223).
(4) If the time limit has not expired or if there is no time limit on the use of the digital content, the management information utilizing unit 146 judges that the condition on the time limit for the use of the digital content is met (S224).
(5) If the time limit expired, the management information utilizing unit 146 judges that the condition is not met and the use of the digital content is prohibited (S225).
(6) When the management information utilizing unit 146 judges that the condition is not met, the management information problem reporting unit 149 displays a problem report notifying the user of the expiration of the time limit (S226). For example, a message such as "Condition Not Met: Time Limit Expired" is displayed on the LCD in the player 140.

Here, to prevent unauthorized avoidance of this condition, it is necessary to keep the user from altering the date information of the clock in the player 140. As an example, the clock is adjusted at the time of manufacturing so that the user cannot alter the date thereafter, and only the manufacturer is capable of readjusting should the clock go wrong or run down.

### 5.4. Duplication

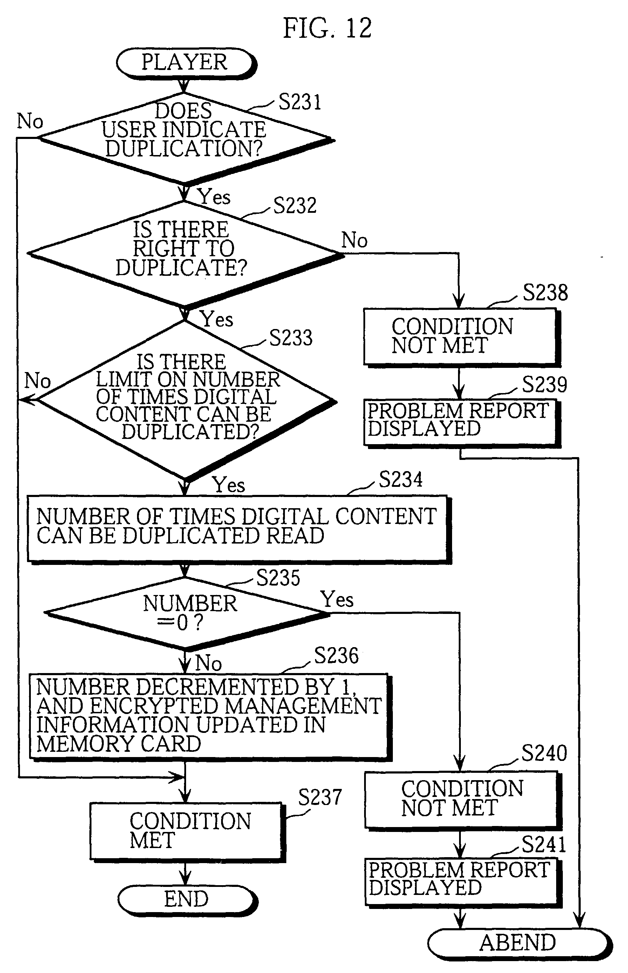

Fig. 12 is a flowchart showing an example operation of the player 140 in checking the duplication status of the digital content (e.g. dubbing of music data).
(1) The management information utilizing unit 146 checks whether the user indicates the duplication of the digital content (S231). If the user indicates other operations such as the reproduction of the digital content, the management information utilizing unit 146 judges that the condition on the duplication is met (S237).
(2) If the user indicates the duplication, the management information utilizing unit 146 checks whether there is a right to duplicate the digital content (S232) based on, for instance, a bit showing the presence or absence of a right to duplicate in the management information. In the example in Fig. 8, the most significant bit of the sixth byte showing the presence or absence of a right to duplicate is "1", which means there is a right to duplicate the digital content. If the most significant bit is "0", there is not right to duplicate.
(3) If there is a right to duplicate, the management information utilizing unit 146 checks whether there is a limit on the number of times the digital content can be duplicated (S233) based on, for instance, a bit showing the presence or absence of such a limit in the management information. In the example in Fig. 8, the second-order bit of the sixth byte showing the presence or absence of such a limit is "1", which means there is a limit on the number of times the digital content can be duplicated. If the second-order bit is "0", there is no limit on the number of times the digital content can be duplicated.
(4) If there is a limit on the number of times the digital content can be duplicated, the management information utilizing unit 146 refers to the number in the management information (S234).
(5) The management information utilizing unit 146 checks whether the number is 0 (S235).
(6) If the number is not 0, the management information utilizing unit 146 decrements the number by 1. Following this, the management information encrypting unit 147 encrypts the management information, the encrypted management information sending unit 148 sends the encrypted management information to the encrypted management information receiving unit 124 in the memory card 120, and the encrypted management information storing unit 125 replaces the encrypted management information stored therein with the encrypted management information received by the encrypted management information receiving unit 124 (S236).
(7) If the number is not 0, if the user does not indicate the duplication of the digital content, or if there is no limit on the number of times the digital content can be duplicated, the management information utilizing unit 146 judges that the condition is met (S237).
(8) If there is no right to duplicate the digital content, the management information utilizing unit 146 judges that the condition is not met and the duplication of the digital content is prohibited (S238).
(9) When the management information utilizing unit 146 judges that the condition is not met in step S238, the management information problem reporting unit 149 displays a problem report notifying the user that there is no right to duplicate the digital content (S239). For example, a message such as "Condition Not Met: No Duplication Right" is displayed on the LCD in the player 140.
(10) If the number is 0, the management information utilizing unit 146 judges that the condition is not met and the duplication of the digital content is prohibited (S240).
(11) When the management information utilizing unit 146 judges that the condition is not met in step S240, the management information problem reporting unit 149 displays a problem report notifying the user that no further duplication of the digital content is permitted (S241). For example, a message such as "Condition Not Met: No Further Duplication Permitted" is displayed on the LCD in the player 140.

Though in this embodiment the information on the number of times the digital content can be duplicated is updated in the memory card 120 before the digital content is duplicated, the information may be updated after the digital content is duplicated.

### 5.5. Area Information

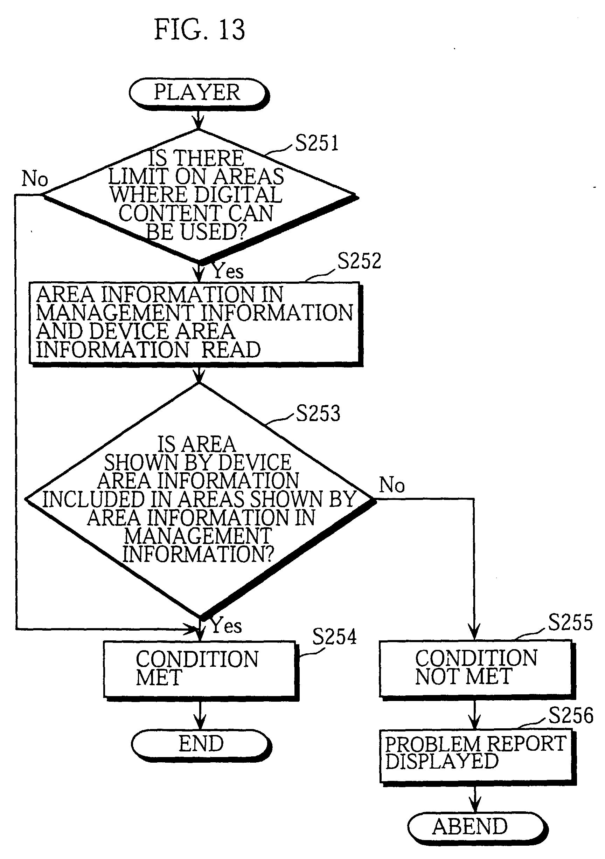

Fig. 13 is a flowchart showing an example operation of the player 140 in checking the limitation on areas where the digital content can be used.
(1) The management information utilizing unit 146 checks whether there is a limit on areas where the digital content can be used (S251) based on, for instance, a bit showing the presence or absence of an area limitation in the management information. In the example of Fig. 8, the most significant bit of the seventh byte showing the presence or absence of such a limit is "1", which means there is an area limitation imposed on the use of the digital content. If the most significant bit is "0", there is no area limitation on the use of the digital content.
(2) If there is an area limitation, the management information utilizing unit 146 refers to the area information in the management information, and also refers to device area information, prestored in the player 140, that shows the country of manufacturing of the device and the like (S252).
(3) The management information utilizing unit 146 checks whether the area shown in the device area information is contained in the areas shown in the area information in the management information (S253). As an example, if the area information in the management information shows Asia and North America and the device area information shows Japan, it is judged that the area shown by the device area information is contained in the area information in the management information.
(4) If the area shown by the device area information is contained in the area information in the management information or if there is no area limitation, the management information utilizing unit 146 judges that the condition on the areas where the digital content can be used is met (S254).
(5) If the area shown by the device area information is not found in the area information in the management information, the management information utilizing unit 146 judges that the condition is not met and the use of the digital content is prohibited (S255).
(6) When the management information utilizing unit 146 judges that the condition is not met, the management information problem reporting unit 149 displays a problem report notifying the user that the player 140 does not comply with the area limitation of the digital content (S256). For example, a message such as "Condition Not Met: Area Incompatible" is displayed on the LCD in the player 140.

Note that this area limitation can be used in combination with the time limit described above. For instance, the area limitation may be made invalid upon the expiration of the time limit.

Note also that the process of updating the management information is unnecessary if there are no conditions which need to be updated. In such a case, the management information encrypting unit 147 and the encrypted management information sending unit 148 can be omitted from the player 140.

### 6. Notification Methods

### 6.1. Player 140

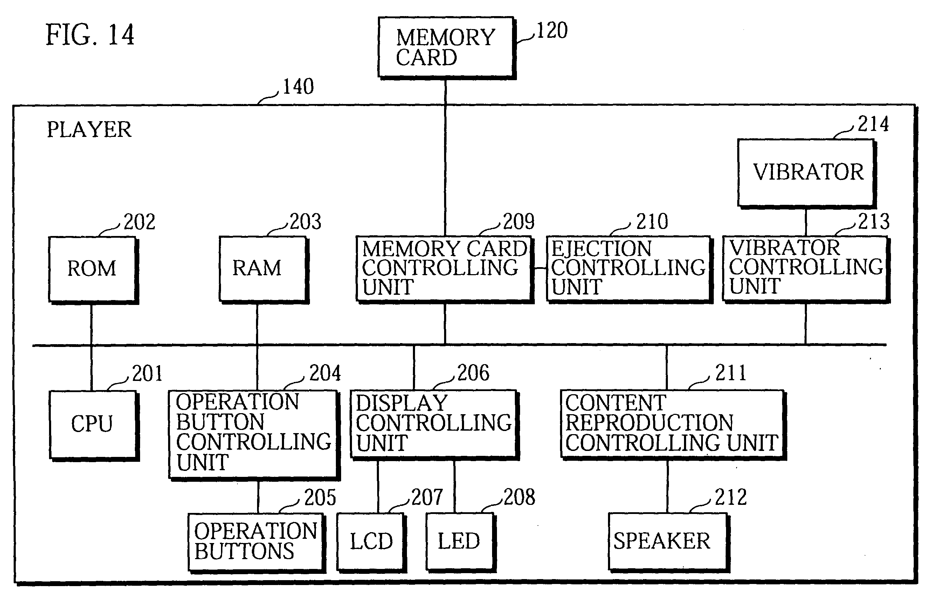

Fig. 14 shows the hardware construction of the player 140.

The player 140 is implemented as a music player for handling music data, an electronic book player for handling document data, or the like. The player 140 is equipped with a CPU 201 for controlling the entire operation of the player 140, a ROM 202 storing a control program, a RAM 203 used to execute the control program and process digital content, operation buttons 205 used by the user to indicate operations such as selection/reproduction of digital content (e.g. playback of music), an operation button controlling unit 204 for controlling the input of the operation buttons 205, an LCD 207 and an LED (Light Emitting Diode) 208 for displaying problem reports as well as reports on the reproduction of the digital content (e.g. music number, title, playback time), a display controlling unit 206 for controlling the output of the LCD 207 and the LED 208, a memory card controlling unit 209 for sending/receiving data to/from the memory card 120, an ejection controlling unit 210 for automatically ejecting the memory card 120, a speaker 212 for outputting sounds, a content reproduction controlling unit 211 for decrypting the encrypted digital content read from the memory card 120 and outputting the digital content (e.g. music data) to the speaker 212, a vibrator 214 for alerting the user of the completion of an operation or the occurrence of a problem, and a vibrator controlling unit 213 for controlling the output of the vibrator 214.

### (1) LCD 207

A display device such as the LCD 207 is most commonly used to display problem reports.

Examples of such displays are given below.

When authentication has failed, a message such as "Authentication Failed" or "Memory Card Authentication Failed" is displayed. When a condition for the use of the digital content is not met, a message such as "Use Prohibited" is displayed, along with information concerning the unmet condition. Even when all conditions are met, information such as the number of times the digital content can be used may be notified to the user by a message "Use Permitted n More Times", thereby letting the user know at a glance how many more times the digital content can be used. In a like manner, a message such as "Expiry Date: ( Year/Month/Day)" or "Use Permitted Only In Japan" is possible.

Here, not only messages but also icons may be displayed.

### (2) LED 208

Also, a light emitting device such as the LED 208 may be used to notify the user of a cause of a problem.

Here, the player 140 may be equipped with a plurality of LEDs which correspond to separate types of problems. Alternatively, if the player 140 is equipped with one LED that is capable of emitting green light and red light, various combinations of colors and lighting patterns can be used for different types of problems, such as green light indicating a normal state, flashing red light indicating an authentication failure, and red light indicating a failure to meet a condition.

### (3) Speaker 212

Also, sounds such as beeps, melodies, or voices may be used to notify the user of a cause of a problem.

If the player 140 is equipped with a beeper in place of the speaker 212, it is possible to alert the user of various problems by employing different beeping patterns.

Also, if the player 140 prestores data of melodies associated with different types of problems, in the event of a problem a melody associated with that problem can be outputted from the speaker 212.

Also, if the player 140 prestores data of voice messages associated with different types of problems, in the event of a problem a voice message associated with that problem can be outputted from the speaker 212, in addition to a display of a message of the same content on the LCD 207.

### (4) Ejection Controlling Unit 210

The player 140 may automatically eject the memory card 120 by the ejection controlling unit 210, when a problem occurs. This benefits user friendliness, as the user who has a lot of memory cards can quickly check which memory card is applicable to the player 140.

The ejection of the memory card 120 may also be used to allow the user to distinguish which problem has occurred. For example, the memory card 120 is ejected when authentication has failed, whereas the memory card 120 is not ejected when authentication has succeeded but a condition to use digital content is not met. Since the failure of the authentication means the memory card 120 itself is unusable, ejecting the memory card 120 is more convenient for the user who wants to try another memory card. On the other hand, since the failure to meet the condition means not the memory card 120 but the digital content is unusable, not ejecting the memory card 120 is more convenient for the user who wants to use another digital content recorded on the memory card 120.

### (5) Vibrator 214

Also, the vibrator 214 may be used to alert the user of the occurrence of a problem. If the player 140 is integrated with a mobile phone, the vibrator 214 can provide notification of both an incoming call and a problem.

Since the notifications by the ejection controlling unit 210 and the vibrator 214 are both silent, they are particularly effective for use inside a train or in a dark place.

Various combinations of the above notification means (1)∼(5) are also applicable.

### 6.2. Recorder 100

The recorder 100 can notify a cause of a problem to the user in a manner similar to the player 140, when recording music data which has been downloaded by a personal computer via the Internet, onto the memory card 120.

Here, if the recorder 100 does not have the notification means (1)∼(5) like the player 140, the recorder 100 can pass a problem report to the personal computer so that the problem report is displayed on the personal computer.

Though a memory card equipped with a large-capacity semiconductor memory and a control circuit has been used as a medium for storing encrypted digital content and encrypted management information in the above embodiment, any read/write storage medium, such as a hard disk, a floppy disk, a DVD-RAM (Digital Versatile Disk - Read Only Memory), or a CD-R (Compact Disk - Recordable), may instead be used together with a control device therefor. Here, if a storage medium other than the memory card is used, a value uniquely given to the storage medium substitutes for the card ID.

Also, computer-readable storage mediums storing programs for executing the above embodied operations may be distributed for transactions.

The computer-readable storage mediums mentioned here may be removable storage mediums such as floppy disks, CDs, MOs (Magneto-Optical disks), DVDs, and memory cards, or fixed storage mediums such as hard disks and semiconductor memories.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A digital data utilizing device for receiving digital data from a digital data intelligent memory device and utilizing the digital data, comprising:
connecting means for connecting the digital data utilizing device with the digital data intelligent memory device;
receiving means for receiving the digital data from the digital data intelligent memory device connected with the digital data utilizing device;
utilizing means for utilizing the digital data received by the receiving means; and
problem reporting means for reporting to a user, when processing from the connection by the connecting means to the utilization by the utilizing means is aborted at some point and the utilization of the digital data becomes impossible, a reason why the digital data cannot be utilized, based on at which point the processing is aborted.

2. The digital data utilizing device of Claim 1, further comprising
mutual authenticating means for authenticating, before the reception of the digital data by the receiving means, the digital data intelligent memory device through an exchange of data with the digital data intelligent memory device, in mutual authentication between the digital data utilizing device and the digital data intelligent memory device,
wherein the digital data intelligent memory device sends the digital data when the digital data intelligent memory device has succeeded in authenticating the digital data utilizing device, and sends authentication failure information when the digital data intelligent memory device has failed to authenticate the digital data utilizing device,
wherein the receiving means receives the digital data when the mutual authenticating means has succeeded in authenticating the digital data intelligent memory device, and
wherein the problem reporting means includes:
authentication failure information receiving means for receiving the authentication failure information from the digital data intelligent memory device;
reason determining means for determining that the digital data cannot be utilized because the digital data intelligent memory device is invalid, when the mutual authenticating means has failed to authenticate the digital data intelligent memory device, and determining that the digital data cannot be utilized because the digital data utilizing device is invalid, when the authentication failure information receiving means receives the authentication failure information; and
reason notifying means for notifying the user of the reason determined by the reason determining means.

3. The digital data utilizing device of Claim 2,
wherein the problem reporting means further includes
timeout judging means for judging whether data which the digital data utilizing device should receive from the digital data intelligent memory device is received within a predetermined time period, and
wherein the reason determining means determines that the digital data cannot be utilized because of a failure of the digital data intelligent memory device, when the timeout judging means judges that the data was not received within the predetermined time period.

4. The digital data utilizing device of Claim 1,
wherein the digital data received by the receiving means includes digital content which is subjected to utilization and management information which shows at least one condition to be met for utilizing the digital content, the management information having been encrypted,
wherein the utilizing means includes:
management information decrypting means for decrypting the encrypted management information received by the receiving means, to obtain the management information;
decryption judging means for judging whether the management information decrypting means has succeeded in decrypting the encrypted management information; and
content utilizing means for utilizing the digital content received by the receiving means, if the decryption judging means judges that the management information decrypting means has succeeded in decrypting the encrypted management information, and
wherein the problem reporting means includes:
reason determining means for determining that the digital data cannot be utilized because the management information has been tampered with, when the decryption judging means judges that the management information decrypting means has failed to decrypt the encrypted management information; and
reason notifying means for notifying the user of the reason determined by the reason determining means.

5. The digital data utilizing device of Claim 4,
wherein the management information has been encrypted in such a manner that the encrypted management information can be decrypted based on a device ID uniquely given to the digital data intelligent memory device,
wherein the digital data utilizing device further comprises
device ID acquiring means for acquiring the device ID from the digital data intelligent memory device connected with the digital data utilizing device,
wherein the management information decrypting means decrypts the encrypted management information received by the receiving means, based on the device ID acquired by the device ID acquiring means, and
wherein the reason determining means determines that the digital data cannot be utilized because the management information has been tampered with or because the encrypted management information has been illegally copied into the digital data intelligent memory device from another digital data intelligent memory device, when the decryption judging means judges that the management information decrypting means has failed to decrypt the encrypted management information.

6. The digital data utilizing device of Claim 4,
wherein the utilizing means further includes
condition judging means for judging, when the decryption judging means judges that the management information decrypting means has succeeded in decrypting the encrypted management information, whether the utilization of the digital content is permitted or prohibited, by checking whether the conditions shown in the management information obtained by the management information decrypting means are met,
wherein the content utilizing means utilizes the digital content if the condition judging means judges that the utilization of the digital content is permitted, and
wherein the reason determining means determines that the digital data cannot be utilized because any of the conditions for utilizing the digital content is not met, when the condition judging means judges that the utilization of the digital content is prohibited.

7. The digital data utilizing device of Claim 6,
wherein the digital content received by the receiving means has been coded in a predetermined data format and is compatible only with a predetermined service, and the conditions shown in the management information includes a service type limitation specifying the service compatible with the digital content,
wherein the utilizing means further includes
service information holding means for holding service information showing at least one service which the digital data utilizing device is compatible with,
wherein the condition judging means judges that the utilization of the digital content is prohibited, if the service specified by the service type limitation does not match any of the services shown by the service information, and
wherein the reason determining means determines that the digital data cannot be utilized because the digital data utilizing device does not provide the service compatible with the digital content, when the condition judging means judges that the utilization of the digital content is prohibited.

8. The digital data utilizing device of Claim 6,
wherein the conditions shown in the management information includes a limitation on a number of times the digital content can be utilized,
wherein the condition judging means judges that the utilization of the digital content is prohibited, if the number is smaller than 1, and
wherein the reason determining means determines that the digital data cannot be utilized because the number of times the digital content can be utilized is 0, when the condition judging means judges that the utilization of the digital content is prohibited.

9. The digital data utilizing device of Claim 6,
wherein the conditions shown in the management information includes a time limit for utilizing the digital content,
wherein the utilizing means further includes
clocking means for showing current date and time,
wherein the condition judging means judges that the utilization of the digital content is prohibited, if the current date and time exceed the time limit, and
wherein the reason determining means determines that the digital data cannot be utilized because of expiration of the time limit, when the condition judging means judges that the utilization of the digital content is prohibited.

10. The digital data utilizing device of Claim 6,
wherein the conditions shown in the management information includes duplication information showing whether there is a right to duplicate the digital content,
wherein the utilizing means further includes
operation type judging means for judging whether the user instructs the duplication of the digital content,
wherein the condition judging means judges that the duplication of the digital content is prohibited, if the user instructs the duplication of the digital content but the duplication information shows there is no right to duplicate the digital content, and
wherein the reason determining means determines that the digital data cannot be utilized because there is no right to duplicate the digital content, when the condition judging means judges that the duplication of the digital content is prohibited.

11. The digital data utilizing device of Claim 10,
wherein the conditions shown in the management information further includes a limitation on a number of times the digital content can be duplicated,
wherein the condition judging means judges that the duplication of the digital content is prohibited, if the user instructs the duplication of the digital content and the duplication information shows there is a right to duplicate the digital content, but if the number of times the digital content can be duplicated is smaller than 1, and
wherein the reason determining means determines that the digital data cannot be utilized because the number of times the digital content can be duplicated is 0, when the condition judging means judges that the duplication of the digital content is prohibited.

12. The digital data utilizing device of Claim 6,
wherein the conditions shown in the management information includes an area limitation specifying areas where the digital content can be utilized,
wherein the utilizing means further includes
device area information holding means for holding device area information showing an area which relates to the digital data utilizing device,
wherein the condition judging means judges that the utilization of the digital content is prohibited, if the areas specified by the area limitation do not contain the area shown by the device area information, and
wherein the reason determining means determines that the digital data cannot be utilized because the digital data utilizing device does not comply with the area limitation of the digital content, when the condition judging means judges that the utilization of the digital content is prohibited.

13. The digital data utilizing device of Claim 6,
wherein the reason notifying means disconnects the digital data intelligent memory device from the digital data utilizing device by automatically ejecting the digital data intelligent memory device from the digital data utilizing device, if the decryption judging means judges that the management information decrypting means has failed to decrypt the encrypted management information, whereas the reason notifying means does not disconnect the digital data intelligent memory device from the digital data utilizing device, if the condition judging means judges that the utilization of the digital content is prohibited.

14. The digital data utilizing device of Claim 1,
wherein the problem reporting means reports the reason to the user through one of notification means that include a display capable of displaying characters and symbols, a light-emitting device capable of lighting up and flashing, a speaker capable of outputting voices and melodies, a beeper, a vibrator, and a device capable of initiating a mechanical operation that involves the digital data intelligent memory device, or through any combination of at least two of the notification means.

15. A digital data intelligent memory device for sending digital data to a digital data utilizing device that utilizes the digital data, comprising:
storing means for storing the digital data;
connecting means for connecting the digital data intelligent memory device with the digital data utilizing device;
mutual authenticating means for authenticating the digital data utilizing device through an exchange of data with the digital data utilizing device, in mutual authentication between the digital data intelligent memory device and the digital data utilizing device,
digital data sending means for sending the digital data to the digital data utilizing device when the mutual authenticating means has succeeded in authenticating the digital data utilizing device, wherein the digital data is received by the digital data utilizing device when the digital data utilizing device has succeeded in authenticating the digital data intelligent memory device; and
authentication failure information sending means for sending authentication failure information to the digital data utilizing device, when the mutual authenticating means has failed to authenticate the digital data utilizing device.

16. A digital data intelligent memory device for receiving digital data from a digital data recording device and storing the digital data, comprising:
connecting means for connecting the digital data intelligent memory device with the digital data recording device;
mutual authenticating means for authenticating, in mutual authentication between the digital data intelligent memory device and the digital data recording device, the digital data recording device through an exchange of data with the digital data recording device, wherein the digital data recording device sends the digital data to the digital data intelligent memory device when the digital data recording device has succeeded in authenticating the digital data intelligent memory device;
receiving means for receiving the digital data from the digital data recording device, when the mutual authenticating means has succeeded in authenticating the digital data recording device;
storing means for storing the digital data received by the receiving means; and
authentication failure information sending means for sending authentication failure information to the digital data recording device, when the mutual authenticating means has failed to authenticate the digital data recording device.

17. A digital data recording device for sending digital data to a digital data intelligent memory device to record the digital data into the digital data intelligent memory device, comprising:
connecting means for connecting the digital data recording device with the digital data intelligent memory device;
acquiring means for acquiring the digital data;
sending means for sending the acquired digital data to the digital data intelligent memory device connected with the digital data recording device; and
problem reporting means for reporting to a user, when processing from the connection by the connecting means to the sending by the sending means is aborted at some point and the sending of the digital data becomes impossible, a reason why the digital data cannot be sent, based on at which point the processing is aborted.

18. The digital data recording device of Claim 17, further comprising
mutual authenticating means for authenticating, before the sending of the digital data by the sending means, the digital data intelligent memory device through an exchange of data with the digital data intelligent memory device, in mutual authentication between the digital data recording device and the digital data intelligent memory device,
wherein the sending means sends the digital data when the mutual authenticating means has succeeded in authenticating the digital data intelligent memory device,
wherein the digital data intelligent memory device receives the digital data when the digital data intelligent memory device has succeeded in authenticating the digital data recording device, and sends authentication failure information when the digital data intelligent memory device has failed to authenticate the digital data recording device, and
wherein the problem reporting means includes:
authentication failure information receiving means for receiving the authentication failure information from the digital data intelligent memory device;
reason determining means for determining that the digital data cannot be sent because the digital data intelligent memory device is invalid, when the mutual authenticating means has failed to authenticate the digital data intelligent memory device, and determining that the digital data cannot be sent because the digital data recording device is invalid, when the authentication failure information receiving means receives the authentication failure information; and
reason notifying means for notifying the user of the reason determined by the reason determining means.

19. The digital data recording device of Claim 17,
wherein the problem reporting means reports the reason to the user through one of notification means that include a display capable of displaying characters and symbols, a light-emitting device capable of lighting up and flashing, a speaker capable of outputting voices and melodies, a beeper, a vibrator, and a device capable of initiating a mechanical operation that involves the digital data intelligent memory device, or through any combination of at least two of the notification means.

20. A computer-readable storage medium storing a digital data utilizing program, used in a digital data utilizing device, for receiving digital data from a digital data intelligent memory device and utilizing the digital data, the program comprising:
a connecting step for connecting the digital data utilizing device with the digital data intelligent memory device;
a receiving step for receiving the digital data from the digital data intelligent memory device;
a utilizing step for utilizing the digital data received in the receiving step; and
a problem reporting step for reporting to a user, when processing from the connection in the connecting step to the utilization in the utilizing step is aborted at some point and the utilization of the digital data becomes impossible, a reason why the digital data cannot be utilized, based on at which point the processing is aborted.

21. A computer-readable storage medium storing a digital data recording program, used in a digital data recording device, for sending digital data to a digital data intelligent memory device to record the digital data into the digital data intelligent memory device, the program comprising:
a connecting step for connecting the digital data recording device with the digital data intelligent memory device;
an acquiring step for acquiring the digital data;
a sending step for sending the acquired digital data to the digital data intelligent memory device; and
a problem reporting step for reporting to a user, when processing from the connection in the connecting step to the sending in the sending step is aborted at some point and the sending of the digital data becomes impossible, a reason why the digital data cannot be sent, based on at which point the processing is aborted.
